# EUROPÄISCHE PATENTSCHRIFT

(11) **EP 2 000 321 B1**
(45) Veröffentlichungstag und Bekanntmachung des Hinweises auf die Patenterteilung: **17.07.2013**
(21) Anmeldenummer: 08005568.4
(22) Anmeldetag: 30.12.2003
(51) Int. Cl.: B42D 15/10, B32B 27/32, B41M 3/14

(54) **Mehrschichtlaminat**
Multi-layer laminate
Laminé multicouche

(30) Priorität: 27.02.2003 CH 301032003; 28.05.2003 CH 963032003
(43) Veröffentlichungstag der Anmeldung: 10.12.2008
(62) Teilanmeldung aus: 03767369.6
(73) Patentinhaber: Landqart, 7302 Landquart (CH)
(72) Erfinder: Grob, Jakob, 7303 Mastrils (CH); Smith, Paul, 8006 Zürich (CH); Feldman, Kirill, 8050 Zürich (CH)
(74) Vertreter: Bremi, Tobias Hans

(56) Entgegenhaltungen:
- EP-A- 1 122 089
- WO-A-99/67093
- US-A- 4 507 349
- US-A- 5 296 307
- US-A- 5 393 099

## Beschreibung

### TECHNISCHES GEBIET

Die vorliegende Erfindung betrifft ein Mehrschichtlaminat, welches beispielsweise als Druckträger, insbesondere als Sicherheitspapier, aber auch als Verpackungsmaterial, Abdeckungsmaterial, Kartensubstrat, etc. Verwendung finden kann. Das Mehrschichtlaminat umfasst wenigstens eine Kunststoffschicht mit einer Ober- und einer Unterseite, eine mit der Kunststoffschicht verbundene obere Papierlage auf der Oberseite der Kunststoffschicht sowie ggf. eine mit der Kunststoffschicht verbundene untere Papierlage auf der Unterseite der Kunststoffschicht.

### STAND DER TECHNIK

Kombinationen von Papier und Kunststoff in einem Laminat finden vielfältige Verwendung. Üblicherweise wird durch ein derartiges Laminat die Widerstandsfähigkeit von Papier erhöht (Reissfestigkeit, Verschmutzungsresistenz, etc.). Typische Verwendungen von derartigen Laminaten sind beispielsweise Verpackungsmaterialien, bedruckt oder unbedruckt, Abdeckungsmaterialien wie Tischdecken, Einlagen für Schubladen etc., Geschenkpapier, etc.. Derartige Laminate finden aber auch Anwendung als Druckträger beispielsweise als Deckblätter für Journale, als Glückwunschkarten, als Substrat für Landkarten, und, bisher jedoch in geringem Masse, als Sicherheitspapier insbesondere als Banknote. Typischerweise werden dabei die Kunststoffschicht und die Papierlage über einen Haftvermittler verbunden.

Die langjährige Diskussion über die Vor- und Nachteile von Papier und Polymermaterialien als Substrate für Banknoten ist nunmehr in eine reife Phase gelangt. Obwohl die Polymersubstrate auch heute nicht mehr als einige Prozent Marktanteil am Banknotenmarkt haben und ihre erfolgte Einführung teilweise als Fehlentscheidung erachtet wurde, sind doch bestimmte Eigenschaften der Banknoten aus Polymermaterial als Fortschritt erachtet worden und könnten das Eigenschaftsportfolio der erfolgreichen Papiernoten sinnvoll ergänzen, sofern eine Synthese aus beiden Produkten technisch denkbar wäre.

Weitere Zielgrössen sind darüber hinaus neben der Fälschungssicherheit des neuen Substrates die Bedruckbarkeit mit konventionellen Banknotendruckverfahren sowie die Kompatibilität mit den üblichen Sortiermaschinen und Bankautomaten, aber eben auch weitere Sicherheitsmerkmale, die ohne oder nur mit einfachen Hilfsmitteln erkennbar sind.

Parallel zu dieser Entwicklung fand in den letzten Jahren eine Diskussion über das Für und Wider des Papiersubstrates gegenüber dem Polymersubstrat statt. Die Kunststoffnoten, die insbesondere im australischen Markt ihren Kernmarkt haben, weisen dagegen den Vorteil des günstigeren Anti-Ageing Verhalten im Sinne der mechanischen Stabilität und der Anschmutzbarkeit auf. Daneben ist bei den Polymernoten häufig ein Klarsichtfenster integriert, das in dieser Form in Papiernoten bisher nicht demonstriert worden ist. Das Klarsichtfenster ist in der Diskussion als Erststufenmerkmal von hohem Wert eingestuft worden, im Urteil einiger Experten allerdings das einzige polymertypische Sicherheitsmerkmal von Wert.

Obwohl die Polymernoten bis heute nur einige Prozent des Banknotenmarktes erobert haben, übten diese doch auf die Marktteilnehmer einen erheblichen Druck aus und veranlassten andere Hersteller ebenfalls synthetische bzw. halbsynthetische Substrate zu lancieren, ohne jedoch in spürbarem Umfang einen Markterfolg zu generieren. Bei den Zentralbanken herrscht heute überwiegend die Meinung, dass die Zukunft dennoch dem Papier gehört, dieses aber in einer weiteren Evolutionsstufe zusätzlich bestimmte wünschenswerte Eigenschaften des Polymers erhalten sollte. In diesem Kontext sei bemerkt, dass mancher Banknotenherausgeber seine Entscheidung zur Einführung von Polymernoten wieder zu Gunsten des Papiers revidiert hat. Zusammen mit dem Bedürfnis nach neuen Erststufenmerkmalen lässt sich deutlich der Wunsch nach einer Papiernote mit möglichem integriertem Klarsichtfenster und vielleicht weiteren Erststufenmerkmalen ausmachen. Je nach Anwendung (Gebrauchshäufigkeit, Klima, etc.) lassen sich noch Wünsche nach hoher Reissfestigkeit oder geringerer Anschmutzbarkeit ("Anti-Soiling Verhalten") feststellen.

Die herkömmlichen Banknotenpapiere basieren traditionell auf Baumwolle als Hauptfaserrohstoff. Daneben werden auch Flachs, synthetische Fasern und Leinen zur Verstärkung der mechanischen Festigkeiten beigemischt. Es handelt sich dabei nicht nur um nachwachsende Rohstoffe, im Fall der Baumwollkämmlinge wird zudem ein Nebenprodukt der Spinnereündustrie einer sinnvollen Verwendung zugeführt, was die Nachhaltigkeit der Banknotenpapierherstellung aus ökologischer Sicht nur verstärkt. Mit Hilfe von Zusatzstoffen werden die hohen Werte für Nassfestigkeit erreicht.

Seit den 70er Jahren sind Multitonwasserzeichen im Banknotenbereich üblich, die im Laufe der Jahre ständig verfeinert wurden. Seit der Einführung der Rundsiebtechnologie gehören Sicherheitsfäden im Papier zum Stand der Technik. Auch hier wurden laufend neue Varianten wie Fensterfäden, breite Fäden oder personalisierte Fäden eingeführt. Sicherheitsmerkmale, die durch einfache Zugabe in den Faserstoff in den Herstellprozess eingeführt werden können wie z. B. Pigmente oder Tracerfasern, sind leicht in das Papier zu integrieren, andererseits durch einen Fälschungsprozess, der auf Druckverfahren beruht, meist nur schwer zu imitieren. Dies begründet den Wert des Papiers für Sicherheitsanwendungen und machen es seit langem zu einem bevorzugten Substrat für Banknoten.

Durch die offene Porenstruktur der Papiersubstrate sind diese anfällig gegen Verschmutzungen und haben damit in Bezug auf ihre Umlaufzeit als Banknoten eine begrenzte Lebensdauer. Seit Ende der 90er Jahre begegnet man diesem Problem mit Banknotensubstraten, die mit Hilfe eines dünnen Striches eine versiegelte Oberfläche aufweisen. Nachteilig wirkt sich dabei oft eine ungenügende Abstimmung von Druckfarbe und Oberflächenstrich aus, die auch wiederum einer höheren Lebenserwartung der Banknoten entgegenwirkt.

Erste Versuche zur Einführung einer Banknote auf Polymerbasis wurden für Haiti unternommen. Ein weiterer Versuch ist für die Isle of Man bekannt. Das Material litt aber aufgrund seiner extrem hydrophoben Eigenschaften unter einer starken Verschmutzungsanfälligkeit in Bezug auf oleophile Substanzen.

In gewisser Weise als erfolgreich können die Bemühungen in Australien gelten, wo noch heute derartige Banknoten Verwendung finden, der Erfolg wäre allerdings nicht ohne die spezifisch für dieses Substrat entwickelten Druckfarben denkbar. Die zur Anpassung der Farben an diese spezifischen Bedingungen erforderlichen Zusätze verhindern aber die zur Verfügungstellung von bestimmten Farbtönen.

Ursache für den relativ bescheidenen Markterfolg der Polymersubstrate dürfte die insgesamt geringe Zahl an Sicherheitsmerkmalen sein, die überhaupt mit diesem Material demonstriert worden ist. Als nennenswertes Merkmal wäre hier wie schon erwähnt lediglich das Klarsichtfenster aufzuzeigen. Der Fensterteil des Substrates lässt neue Sicherheitsmerkmale zu, die transparente Bereiche bedingen. Andererseits führt der Mehraufwand für den Druck und die hohen Substratkosten zu einem Gesamtaufwand, der auch bei stark beanspruchten Noten kaum durch die höhere Lebensdauer gerechtfertigt werden kann.

Im Folgenden werden in einer sehr kompakten Form einige Vorteile von Papier- und Polymersubstraten (insbesondere biaxial gerecktes Polypropylen PP) für die Verwendung als Banknotensubstrate aufgelistet:

### Vorteile Papier:

- Griff und Klang von der Öffentlichkeit in hohem Masse akzeptiert
- Möglichkeit der Einbringung von Wasserzeichen
- Einfache Integrierbarkeit von faserigem Material (Melierfasern) in versteckter oder offensichtlicher Form
- Funktionelle Additive oder (hydrophile) Polymere können in einfacher Weise inkorporiert werden
- Beständig gegen übliche Lösungsmittel
- Sehr gute Bedruckbarkeit und Druckfarbenhaftung
- Gute thermische Beständigkeit
- Niedriger, akzeptierter Preis

Vorteile von Kunststoff (PP)-Substrat:
- Relativ geringe Anschmutzbarkeit aufgrund der geringeren Hydrophilie
- Einfache Integrierbarkeit von transparenten oder zumindest freiliegenden Kunststoffbereichen
- Exzellente Reissfestigkeit bei Gebrauchstemperatur

Damit zeigt das Polymer insbesondere einen Vorteil in Bezug auf die Möglichkeit einer Integrierbarkeit eines "Fensters", die mechanischen Festigkeiten bei Raumtemperatur sowie die Anschmutzbarkeit. Es gilt also, das Papiersubstrat zu optimieren und gewissermassen die positiven Eigenschaften von Polymeren in das Papiersubstrat einfliessen zu lassen.

Ein Versuch der Kombination der positiven Eigenschaften von papier-basierten Druckträgern mit den positiven Eigenschaften von Kunststofffolien ist in der US 5,449,200 beschrieben. Dabei wird vorgeschlagen, zwischen zwei Papierschichten eine Kunststoffschicht vorzusehen, wobei diese Kunststoffschicht bedruckt ist, sodass der entsprechende Aufdruck nur in Transmission sichtbar ist, nicht aber in Reflexion. Die Verbindung zwischen Kunststoffschicht und den Papierschichten wird hergestellt, indem die Schichten laminiert werden, wobei ein Adhäsiv zur Anwendung kommt. Problematisch an diesem Ansatz ist die inakzeptabel grosse Gefahr einer Delaminierung von derartigen Substraten, wenn sie in den Umlauf gebracht werden.

Aus der US 296307 ist eine Schutzummantelung für Hochspannungskabel bekannt, bei welcher eine zentrale Schicht aus einem Polyolefin auf zwei Seiten von Papierschichten umgeben ist und diese Sandwich-Struktur als Ummantelung für einen Leiter eingesetzt wird. Als Vorteile werden eine gute Isolationswirkung und eine Reduktion der Quellung bei Kontakt mit Öl angegeben, wenn die Polyolefin-Schicht ein anorganisches Additiv enthält.

### DARSTELLUNG DER ERFINDUNG

Der Erfindung liegt demnach die Aufgabe zugrunde, ein neues Mehrschichtlaminat, z.B. als neuen Druckträger insbesondere aber nicht ausschliesslich für Sicherheitsanwendungen, aber auch für andere Anwendungen wie beispielsweise als Verpackungsmaterial, Etikettenmaterial, Abdeckungsmaterial, als Umschlagmaterial etc., zur Verfügung zu stellen. Das Mehrschichtlaminat respektive bevorzugt der Druckträger soll dabei möglichst mindestens einige der positiven Eigenschaften von einem Papierträger mit den positiven Eigenschaften von Kunststoffträgern vereinen, ohne neue Nachteile zu zeigen. Dabei geht es um Mehrschichtlaminat respektive um einen Druckträger umfassend wenigstens eine Kunststoffschicht, welche ggf. mehrlagig ausgebildet sein kann, mit einer Ober- und einer Unterseite, sowie wenigstens eine mit der Kunststoffschicht verbundene obere Papierlage auf der Oberseite der wenigstens einen Kunststoffschicht. Ausserdem ist eine mit der Kunststoffschicht verbundene untere Papierlage auf der Unterseite der Kunststoffschicht angeordnet, d.h. es die Kunststoffschicht ist beidseitig von Papier umgeben.

Die Lösung dieser Aufgabe wird dadurch erreicht, dass es sich bei der Kunststoffschicht um ein (oder mehrere) thermoplastisches polymeres Material handelt, und dass die Verbindung zwischen den Papierlagen und der Kunststoffschicht im wesentlichen ohne zusätzlichen Haftvermittler jeweils durch Penetrationszonen, in welchen Teile der Kunststoffschicht mit der Masse des Faserverbunds der Papierlage verschmolzen sind, gewährleistet ist, wobei sich die Penetrationszonen im wesentlichen nicht gänzlich bis zu den der Kunststoffschicht abgewandten Oberflächen der Papierlage erstreckt. Bei den beidseitig auf der Kunststoffschicht angeordneten Papierlagen (obere und untere Papierlage) ist eine derartige Verschmelzung mit Penetrationszonen mit beiden Papierlagen gegeben. Die Penetrationszonen können aber auch bis zur jeweiligen Oberfläche der Papierlagen hindurchdringen, und damit jeweils die Papierlagen vollständig gewissermassen tränken.

Der Kern der Erfindung besteht somit in der erstaunlichen Erkenntnis, dass sich Papierschichten und thermoplastische Kunststoffschichten trotz deren sehr unterschiedlichen chemischen Verhaltens (technischer Thermoplast vs. Zellulose) teilweise miteinander verschmelzen lassen, wobei eine äusserst stabile und innige Verbindung zwischen Papierschicht und Kunststoffschicht entsteht. Verschmelzen bedeutet in diesem Zusammenhang, dass der Thermoplast die Zellulose umfliesst und diese als Matrix einbettet. Während nämlich Laminate nach dem Stand der Technik unter Verwendung von reaktiven Adhäsiven oder von lösungsmittelbasierten Adhäsiven als Haftvermittler zwischen Papier und Kunststoffschicht das Problem aufweisen, bei stark belastenden Verwendungen wie beispielsweise als Verpackungsmaterial, Etikettenmaterial, Abdeckungsmaterial oder Umschlagmaterial und insbesondere bei der äusserst beanspruchenden Verwendung als Banknoten zu delaminieren, kann dies durch ein erfindungsgemässes (Mehrschicht-)Laminat verhindert werden. Das erfindungsgemässe Laminat stellt die Verbindung dadurch zur Verfügung, dass oberste Schichten der Kunststoffschicht mit untersten Schichten der Papierlagen direkt verschmolzen werden, d. h. dass die Fasern der Papierlagen in eine Kunststoffmatrix wenigstens teilweise eingebettet sind. Die dabei entstehenden Penetrationszonen in den jeweiligen Grenzbereichen zwischen Kunststoffschicht und Papierlage werden dabei so eingestellt, dass der Kunststoff die Papierlagen zwar teilweise durchdringt, ohne aber vollständig bis zur der Kunststoffschicht abgewandten Oberfläche der Papierlage(n) hindurch zu treten. Dies gewährleistet, dass auf der einen Seite die haptischen Eigenschaften des Papiers am resultierenden Druckträger erhalten bleiben, und dass auf der anderen Seite die Druckeigenschaften des Mehrschichtlaminats respektive Druckträgers ebenfalls im wesentlichen gleich bleiben. Durchdringt nämlich Kunststoff den Papierträger vollständig bis zur Oberfläche oder nahe bis zur Oberfläche, so ändert sich nicht nur der Griff, sondern auch die Porosität (führt gewissermassen zu einem Versiegeln), was die Haftung von Druckfarben oder Tinten massiv erschweren kann und deren Abrieb erleichtern kann.

Auf der anderen Seite führt die Durchdringung der Papierschichten mit dem Thermoplasten auch zu einer Reduktion der Verschmutzungsanfälligkeit (anti-soiling), welche durchaus gewünscht sein kann. Die anti-soiling-Eigenschaften zusammen mit den haptischen und den Druckeigenschaften können somit über den Grad der Durchdringung der Papiermatrix mit dem Thermoplasten gesteuert werden.

Die Kunststoffschicht kann, wie bereits erwähnt als einzelne Schicht aus einem einzigen Material aufgebaut sein, sie kann aber auch als Mehrschichtlaminat (Multilayer-Struktur) aufgebaut werden, wobei einzelne Schichten aus unterschiedlichen thermoplastischen Materialien (unterschiedliche Polymere oder gleiche Polymere mit unterschiedlichen Eigenschaften) bestehen können. Insbesondere können beispielsweise als Schichten, welche direkt mit dem Papier in Kontakt kommen, Thermoplasten verwendet werden, welche ein anderes oder besseres Fliessverhalten (niedrigeres Molekulargewicht, niedrigere Glasübergangstemperatur oder niedrigere Fliesstemperatur) zeigen als die zentralen Schichten.

Gemäss der vorliegenden Erfindung handelt es sich bei mindestens einer der Papierlagen um Papier, welches in einer Rundsiebmaschine hergestellt wurde. Alternativ kann auch eine Langsiebmaschine verwendet werden. Vorzugsweise handelt es sich dabei z.B. um ein typisches Banknoten-Papier, d. h. um ein Papier, welches unter Verwendung von Baumwolle (typischerweise Hauptfaserrohstoff), und/oder Flachs, und/oder Leinen als Faserrohstoff hergestellt wurde.

Die gewünschten Eigenschaften in Bezug auf Verschmelzung zwischen Kunststoffschicht und Papierlagen lassen sich vorzugsweise erreichen, indem als Material für die Kunststoffschicht ein polymeres Material mit einer Glasübergangstemperatur oder Schmelztemperatur im Bereich von 50 bis 250 °C, bevorzugt im Bereich von 75 bis 225 °C, oder im Bereich von 100 bis 200 °C, insbesondere bevorzugt von 120 bis 180 °C verwendet wird. Grundsätzlich sollte es sich um einen Thermoplasten handeln, welcher bei einer Temperatur zu schmelzen oder aufzuweichen beginnt, bei welcher das Papier keinen Schaden nimmt. Beispielsweise kann es sich beim polymeren Material um ein transparentes, beispielsweise teil-amorphes oder vollamorphes Polyamid, ein Polypropylen oder ein Polyethylen handeln, insbesondere bevorzugt um ein Polyamid auf der Basis aliphatischer und cycloaliphatischer Bausteine. Transparentes Polymeres Material ist insbesondere dann vorteilhaft, wenn die Möglichkeit von klaren transparenten Fenstern oder wenigstens einseitig freiliegenden transparenten Bereichen vorgesehen ist. Es ist aber auch möglich, als polymeres Material ein eingefärbtes respektive nicht transparentes Material zu verwenden, auch teiltransparente Materialien sind denkbar. Derartige Polymere sind beispielsweise von der Firma EMS-CHEMIE (CH) unter dem Handelsnamen GRILAMID^{®}, GRILON^{®} oder GRIVORY^{®} erhältlich. Diese Materialien können bei Bedarf entsprechend eingefärbt werden und/oder weitere funktionelle Komponenten enthalten. Als Farbstoffe kommen Farbstoffe im sichtbaren Bereich, aber auch fluoreszierende oder phosphoreszierende Farbstoffe in Frage. Ausserdem kann das thermoplastische Material magnetische Komponenten, elektrisch leitende Komponenten, thermochrome oder photochrome Komponenten, UV-Absorber etc. oder mehrere dieser Komponenten gleichzeitig enthalten.

Grundsätzlich kommen als Material für die Kunststoffschicht folgende Polymere in Frage:
Polymere von Monoolefinen and Diolefinen, z. B. Polypropylen, Polyisobutylen, Polybut-1-en, Poly-4-methylpent-1-en, Polyvinylcyclohexan, Polyisopren oder Polybutadien, sowie Polymere von Cycloolefinen, z. B. von Cyclopenten or Norbornen, Polyethylen (welches optional vernetzt sein kann), z. B. High Density Polyethylen (HDPE), Medium Density Polyethylen (MDPE), Low Density Polyethylen (LDPE), Linear Low Density Polyethylen (LLDPE), (VLDPE) und (ULDPE).

Copolymere von Monoolefinen und Diolefinen miteinander oder mit anderen Vinylmonomeren, z. B. Ethylen/Propylen Copolymere, Linear Low Density Polyethylen (LLDPE) und Mischungen davon mit Low Density Polyethylen (LDPE), Propylen/But-1-en Copolymere, Propylen/Isobutylen Copolymere, Ethylen/But-1-en Copolymere, Ethylen/Hexen Copolymere, Ethylen/Methylpenten Copolymere, Ethylen/Hepten Copolymere, Ethylen/Octen Copolymere, Ethylen/Vinylcyclohexan Copolymere, Ethylen/Cycloolefin Copolymere (z. B. Ethylen/Norbornen wie COC), Ethylen/1-olefin Copolyme, wobei das 1-Olefin in-situ erzeugt wird; Propylen/Butadien Copolymere, Isobutylen/Isoprene Copolymere, Ethylen/Vinylcyclohexen Copolymere, Ethylen/Alkylacrylat Copolymere, Ethylen/Alkylmethacrylat Copolymere, Ethylen/Vinylacetat Copolymere oder Ethylen/Acrylsäure Copolymere und deren Salze (Ionomere) sowie Terpolymere von Ethylen mit Propylen and einem Dien wie beispielsweise Hexadien, Dicyclopentadien oder Ethyliden-Norbornen. Die genannten Homopolymere and Copolymere können eine beliebige räumliche Struktur (Stereostruktur) aufweisen, wie beispielsweise syndiotaktisch, isotaktisch, hemi-isotaktisch oder ataktisch. Stereoblock-Polymere sind auch möglich.

Polystyrol, Poly(p-methylstyrol), Poly(a-methylstyrol). Aromatische Homopolymere und Copolymere abgeleitet von vinylaromatischen Monomeren einschliesslich Styrol, α-Methylstyrol, alle Isomere von Vinyltoluol, insbesondere p-Vinyltoluol, alle Isomere von Ethylstyrol, Propylstyrol, Vinylbiphenyl, Vinylnaphthalin, und Vinylanthracen, und Mischungen davon. Homopolymere and Copolymere können eine beliebige räumliche Struktur aufweisen, einschliesslich syndiotaktisch, isotaktisch, hemi-isotaktisch oder ataktisch. Stereoblock-Polymere sind auch eingeschlossen.

Copolymere einschliesslich die obengenannten vinylaromatischen Monomere und Comonomere ausgewählt aus Ethylen, Propylen, Dienen, Nitrilen, Säuren, Maleinanhydriden, Maleimiden, Vinylacetaten and Vinylchloriden oder AcrylDerivaten und Mischungen davon, beispielsweise Styrol/Butadien, Styrol/Acrylonitril, Styrol/Ethylen (Interpolymere), Styrol/Alkylmethacrylat, Styrol/Butadien/Alkylacrylat, Styrol/Butadien/Alkylmethacrylat, Styrol/Maleinsäureanhydrid, Styrol/Acrylonitril/Methylacrylat; Mischungen mit hoher Schlagzähigkeit aus Styrol Copolymeren und anderen Polymeren, z. B. Polyacrylaten, Dienpolymeren oder Ethylen/Propylen/Dienterpolymeren; sowie Blockcopolymere aus Styrol wie beispielsweise Styrol/Butadien/Styrol, Styrol/Isopren/Styrol, Styrol/Ethylen/Butylen/Styrol oder Styrol/Ethylen/Propylen/Styrol. Wasserstoffgesättigte aromatische Polymere abgeleitet durch Wasserstoff-Sättigung der genannten Polymere insbesondere einschliesslich Polycyclohexylethylen (PCHE) hergestellt durch die Hydrogenierung von ataktischem Polystyrol (wird häufig als Polyvinylcyclohexan (PVCH) bezeichnet).

Pfropf-Copolymere von vinylaromatischen Monomeren wie z. B. Styrol oder α-Methylstyrol, beispielsweise Styrol auf Polybutadien, Styrol auf Polybutadien-Styrol oder Polybutadien-acrylonitril Copolymeren; Styrol und Acrylonitril (oder Methacrylonitril) auf Polybutadien; Styrol, Acrylonitril und Methylmethacrylat auf Polybutadien; Styrol und Maleinsäureanhydrid auf Polybutadien; Styrol, Acrylonitril und Maleinsäureanhydrid oder Maleimid auf Polybutadien; Styrol und Maleimid auf Polybutadien; Styrol und Alkylacrylate oder Methacrylate auf Polybutadienen; Styrol und Acrylonitril auf Ethylen/Propylen/Dienterpolymeren; Styrol und Acrylonitril auf Polyalkylacrylaten oder Polyalkylmethacrylaten, Styrol und Acrylonitril auf Acrylat/Butadien Copolymeren.

Halogen-enthaltende Polymere wie beispielsweise Polychloropren, chlorierte Kautschuke, chlorierte und bromierte Copolymere von Isobutylen-Isopren (Halobutyl Kautschuk), chloriertes oder sulfochloriertes Polyethylen, Copolymere von Ethylen und chloriertes Ethylen, epichlorohydrin Homo- and Copolymere, insbesondere Polymere von Halogen-enthaltenden Vinyl-Komponenten, z. B. Polyvinylchloride, Polyvinylidenchloride, Polyvinylfluoride, Polyvinylidenfluoride, sowie Copolymere daraus wie beispielsweise Vinylchlorid/Vinylidenchlorid, VinylchlorideNinylacetat oder Vinylidenchloride/Vinylacetat Copolymere.

Polymere abgeleitet von α,β-ungesättigten Säuren und Derivate davon wie beispielsweise Polyacrylate und Polymethacrylate; Polymethylmethacrylate, Polyacrylamide und Polyacrylonitrile, schlägzäh-modifiziert mit Butylacrylat. Copolymere der genannten Monomere untereinander oder mit anderen ungesättigten Monomeren, wie beispielsweise Acrylonitril/Butadien Copolymere, Acrylonitril/Alkylacrylat Copolymere, Acrylonitril/Alkoxyalkylacrylate oder Acrylonitril/Vinylhalid Copolymere oder Acrylonitril/ Alkylmethacrylat/Butadien Terpolymere.

Polymere abgeleitet von ungesättigten Alkoholen und Aminen oder von Acylderivaten oder Acetalen davon, beispielsweise Polyvinyl-Alkohol, Polyvinylacetat, Polyvinylstearat, Polyvinylbenzoat, Polyvinylmaleat, Polyvinylbutyral, Polyallylphthalat oder Polyallylmelamin; sowie deren Copolymere mit Olefinen.

Homopolymere und Copolymere von cyclischen Ethern wie beispielsweise Polyalkylenglycole, Polyethylenoxid, Polypropylenoxid oder Copolymere davon mit Bisglycidylethern.

Polyacetale wie beispielsweise Polyoxymethylen und jene Polyoxymethylene welche Ethylenoxid als Comonomer enthalten; Polyacetale modifiziert mit thermoplastischen Polyurethanen, Acrylaten oder MBS.

Polyphenylenoxide and -sulfide.

Polyurethane abgeleitet von hydroxyl-terminierten Polyethern, Polyestern oder Polybutadienen auf der einen Seite und aliphatischen oder aromatischen Polyisocyanaten auf der anderen Seite, sowie Vorstufen davon.

Polyamide and Copolyamide abgeleitet von Diaminen and Dicarbonsäuren und/oder von Aminocarbonsäuren oder den korrespondierenden Lactamen, beispielsweise Polyamid 4, Polyamid 6, Polyamid 6/6, 6/10, 6/9, 6/12, 4/6, 12/12, Polyamid 11, Polyamid 12, aromatische Polyamide ausgehend von m-Xyloldiamin und Adipinsäure; Polyamide hergestellt ausgehend von Hexamethylendiamin und Isophthal- und Terephthalsäure und mit oder ohne Elastomer als Modifikator, beispielsweise Poly-2,4,4,-trimethylhexamethylenterephthalamid oder Poly-m-phenylenisophthalamid; und auch Blockcopolymere von den genannten Polyamiden mit Polyolefinen, Olefincopolymeren, Ionomeren oder chemisch gebundenen oder gepfropten Elastomeren; oder mit Polyethern, z. B. mit Polyethylenglycol, Polypropylenglycol oder Polytetramethylenglycol; sowie auch Polyamiden oder Copolyamiden modifiziert mit EPDM oder ABS; und Polyamide kondensiert während der Herstellung (RIM Polyamid-systeme).

Polyharnstoffe, Polyimide, Polyamid-imide, Polyetherimide, Polyesterimide, Polyhydantoine and Polybenzimidazole.

Polyester abgeleitet von Dicarbonsäuren und Diolen und/oder von Hydroxycarbonsäuren oder den korrespondierenden Lactonen, beispielsweise Polyethylenterephthalat, Polybutylenterephthalat, Poly-1,4-dimethylolcyclohexanterephthalat, Polyalkylennaphthalat (PAN) und Polyhydroxybenzoat, sowie auch Blockcopolyetherester abgeleitet von hydroxyl-terminierten Polyethern.

Polycarbonate and Polyestercarbonate, Polyketone, Polysulfone, Polyethersulfone und Polyetherketone.

Vernetzte Polymere abgeleitet von Aldehyden einerseits und Phenolen, Harnstoffen und Melaminen andererseits, wie beispielsweise Phenol/Formaldehyd Harze, Harnstoff/Formaldehyd Harze and Melamin/Formaldehyd Harze.

Ungesättigte Polyesterharze abgeleitet von Copolyestern von gesättigten und ungesättigten Dicarbonsäuren polyhydrischen Alkoholen and Vinyl-Komponenten als Vernetzungsmittel, und ebenso halogen-enthaltende Modifikationen davon mit niedriger Entflammbarkeit.

Vernetzbare Acryl-Harze abgeleitet von substituierten Acrylaten, z. B. Epoxyacrylate, Urethanacrylate oder Polyesteracrylate.

Alkyd-Harze, Polyester-Harze and Acrylat-Harze vernetzt mit Melamin-Harzen, Harnstoff-Harzen, Isocyanaten, Isocyanuraten, Polyisocyanaten oder Epoxy Harzen.

Vernetzte Epoxy-Harze abgeleitet von aliphatischen, cycloaliphatischen, heterocyclischen oder aromatischen Glycidyl-Komponenten, z. B. Produkte von Diglycidylethern von Bisphenol A und Bisphenol F, welche mit üblichen Härtern vernetzt werden wie beispielsweise mit Anhydriden oder Aminen, mit oder ohne Beschleuniger.

Cellulose-acetate, Cellulosepropionate and Cellulosebutyrate, oder Celluloseether wie Methylcellulose.

Mischungen von zwei oder mehreren dieser genannten Polymere oder Coolymere sind ebenfalls möglich.

Wesentlich ist wie gesagt die Fliessfähigkeit des verwendeten Thermoplasten. Entsprechend können alternativ auch Thermoplasten verwendet werden, deren Glasübergangstemperatur oder Schmelztemperatur unterhalb der oben angegebenen Glasübergangstemperaturen liegt, welche aber im Rahmen der Gebrauchstemperatur eines Produkts (z.B. Banknote) im festen Zustand sind und deren Fliesstemperatur im Bereich von 50 bis 250 °C, bevorzugt im Bereich von 75 bis 225 °C, oder im Bereich von 100 bis 200 °C, insbesondere bevorzugt von 120 bis 180 °C liegt. So beispielsweise im Fall von Polypropylen (PP), Polyethylen (PE), Polyvinylidenchlorid (PVDC) oder Polyvinylidenfluorid (PVDF).

Eine weitere bevorzugte Ausführungsform zeichnet sich dadurch aus, dass die Papierlagen ein Flächengewicht im Bereich von 50 bis 500 g/m², oder sogar 5 bis 500 g/m², bevorzugt im Bereich von 20 bis 80 g/m², oder 10 bis 80 µm, insbesondere bevorzugt im Bereich von 20 bis 50 g/m² aufweisen. Vorzugsweise weist die Kunststoffschicht eine Dicke im Bereich von 5 bis 500 µm, bevorzugt im Bereich von 10 bis 80 µm, insbesondere bevorzugt im Bereich von 20 bis 50 µm auf. Der Druckträger sollte insgesamt ein Flächengewicht im Bereich von 15 bis 1500 g/m², oder 50 bis 500 g/m², bevorzugt im Bereich von 80 oder 60 bis 180 oder bis 200 g/m², insbesondere bevorzugt von im Bereich von 90 bis 120 g/m² zeigen oder von 80 bis 150 g/m².

Ganz besonders vorteilhaft im Zusammenhang mit dem vorgeschlagenen Mehrschichtlaminat respektive Druckträger ist es, dass er mit der Vielzahl von aus dem Bereich der reinen Papierträger bekannten Sicherheitsmerkmalen kombiniert werden kann. Dazu können derartige Sicherheitsmerkmale einfach in wenigstens eine der Papierlagen entweder vor dem Laminationsprozess eingebaut werden, während oder danach. Als Sicherheitsmerkmale kommen die verschiedensten Arten und Typen in Frage, ganz allgemein also z. B. Sicherheitsmerkmale mit entsprechenden Informationsmitteln optischer, elektronischer, elektrischer oder magnetischer Natur, so zum Beispiel Wasserzeichen, insbesondere Graustufen-Wasserzeichen, Sicherheitsfäden, sogenannte optically variable devices (OVDs), Melierfasern, Sicherheitspigmente, irisierende Farbapplikationen, Mirkoperforationen, Mikrodrucke, Offset, Tiefdruck, Magnetstreifen, Chips etc.. Ebenso kann die Kunststoffschicht mit Sicherheitsmerkmalen versehen werden. Dabei kann es sich in der einfachsten Ausführung um einen Aufdruck handeln, welcher in Reflexion infolge der darüber liegenden Papierschichten nicht sichtbar ist (und entsprechend zum Beispiel mit einem Kopiergerät auch nicht reproduziert werden kann), welcher aber in Transmission erkannt werden kann. Es kommen aber bei der Kunststoffschicht auch andere Sicherheitsmerkmale, insbesondere im Bereich von den unten erwähnten Fenstern, in Frage, so zum Beispiel fluoreszierende Bereiche, polarisierende Bereiche, polarisiert fluoreszierende Bereiche, polarisiert absorbierende Bereiche, photochrome Bereiche, Hologramme, Prägen (Embossing), etc..

Das erfindungsgemässe Mehrschichtlaminat respektive der erfindungsgemässe Druckträger weist den aussergewöhnlichen Vorteil auf, dass er, trotz Erscheinung und Griff wie Papier, die Möglichkeit bietet, zusätzliche Informationen als Sicherheitsmerkmale sowie insbesondere Sicherheitsmerkmale in Form von oder eingebaut in Fenstern einzubauen.

Als Fenster ist in diesem Zusammenhang nicht ausschliesslich ein transparenter Bereich zu verstehen, welcher rundum (von Papier) begrenzt ist, ein Fenster im Sinne der vorliegenden Erfindung kann rundum begrenzt sein, kann aber auch beim endgültigen bestimmungsgemässen Mehrschichtlaminat respektive Druckträger derart am Rand angeordnet sein, dass der Fensterbereich direkt an den Rand grenzt. Als Fenster ist grundsätzlich auch nicht ausschliesslich eine Aussparung zu verstehen, welche einen transparenten Bereich beinhaltet, sondern auch Aussparungen, welche eingefärbte sowie beispielsweise nicht-transparente oder teil-transparente, fluoreszierende, phosphoreszierende, polarisierende, optisch brechende oder holographische Kunststoffbereiche freilegen. Ebenfalls möglich sind bei Mehrschichtlaminaten, welche beidseitig mit Papier beaufschlagt sind, Aussparungen, bei welchen nur das Papier auf einer Seite die Kunststoffschicht(en) freilegt. Auch entsprechende Kombinationen sind möglich, bei welchen beispielsweise die Aussparungen in den zwei Papierbahnen nicht deckungsgleich ausgebildet sind, sodass einerseits Bereiche entstehen, bei welchen die Kunststoffschicht von beiden Seiten zugänglich ist, und andererseits wenigstens ein weiterer Bereich, bei welchem die Kunststoffschicht nur von einer Seite zugänglich ist.

Das Fenster selbst und viele der in das Fenster integrierten Informationsträger oder Sicherheitsmerkmale stellen so genannte First-Level Sicherheitsmerkmale, da sie ohne Zuhilfenahme von technischen Geräten von Auge vom Mann auf der Strasse leicht verifiziert werden können. Derartige Sicherheitsmerkmale, wenn sie so gut wie nicht reproduziert werden können, weisen einen aussergewöhnlich hohen Stellenwert auf. Beim erfindungsgemässen Druckträger kann ein Fenster zur Verfügung gestellt werden, indem wenigstens eine der Papierlagen eine durchgängige Aussparung aufweist, sodass die Kunststoffschicht in diesem Bereich freiliegt (einseitiges Fenster zum Beispiel für den Blick auf ein Sicherheitsmerkmal der Kunststoffschicht). Ein richtig transparentes Fenster bei Verwendung einer transparenten Kunststoffschicht wird zur Verfügung gestellt, indem beide Papierlagen eine derartige Aussparung in wenigstens teilweise überlappender Weise unter Bildung eines Fensters aufweisen. Dabei erweist es sich als sicherheitstechnisch interessant, derartige Aussparungen einen unregelmässigem Rand und/oder sanfte Übergänge ohne Kanten zwischen Papier und Fenster aufweisen zu lassen. Erstaunlicherweise treten beim erfindungsgemässen Druckträger die ansonsten insbesondere im Zusammenhang mit Fenstern komplexer Aussenlinie auftretenden Probleme des Ablösens von Papierlagen von der Kunststoffschicht im Randbereich so gut wie nicht auf.

Um eine homogene Dicke des Mehrschichtlaminats respektive Druckträgers gewährleisten zu können, ist es ausserdem möglich, im Bereich der Aussparung bei der Herstellung eine weitere Kunststofflage mit der gleichen oder einer ähnlichen Kontur wie das Fenster in das Fenster hineinzulegen.

Grundsätzlich zeigt es sich, dass insbesondere der Bereich des Fensters respektive der einseitigen Aussparung für die Anordnung von Sicherheitsmerkmalen in der Kunststofffolie besonders gut geeignet sind. So können beispielsweise in diesen Bereichen Sicherheitsmerkmale mit polarisierenden Eigenschaften eingebaut werden. Ebenso eignen sich derartige Fenster sehr gut für so genannte "self-verifying" Eigenschaften, d. h. die Verifikation von anderen Sicherheitsmerkmalen unter Zuhilfenahme des Fensters. So können beispielsweise polarisierende Eigenschaften eines Sicherheitsmerkmals dadurch verifiziert werden, dass ein Fensterbereich mit ebenfalls polarisierenden Transmissionseigenschaften durch Falten der Banknote über das Sicherheitsmerkmal gelegt wird.

Weitere bevorzugte Ausführungsformen des erfindungsgemässen Druckträgers sind in den abhängigen Ansprüchen beschrieben.

Weiterhin betrifft die vorliegende Erfindung ein Verfahren zur Herstellung eines Mehrschichtlaminats wie beispielsweise eines Druckträgers, wie er oben beschrieben wurde. Vorzugsweise wird so vorgegangen, dass in einem Laminator die wenigstens eine Papierlage mit der Kunststoffschicht wenigstens teilweise verschmolzen wird, wobei eine Temperatur von im Bereich von 50 bis 250 °C, bevorzugt im Bereich von 75 bis 225 °C, oder im Bereich von 100 bis 200 °C, insbesondere bevorzugt von 140 bis 180 Grad verwendet wird. Vorzugsweise wird ausserdem ein Druck von im Bereich von 10 Pa bis 10 MPa, bevorzugt von 1kPa bis 10 MPa, oder von 1kPa bis 5 MPa, insbesondere bevorzugt von im Bereich von 0.5 MPa bis 2 MPa verwendet. Dabei kann ein Programm gefahren werden, z. B. indem zunächst die Temperatur erhöht wird und anschliessend der Druck, oder umgekehrt. Das Verfahren kann entweder batchweise in Pressen geschehen, kann aber auch kontinuierlich geführt werden. Bei kontinuierlicher Führung werden entsprechend die einzelnen Träger von Rollen zugeführt, und es handelt sich beim Laminator um einen Rollenlaminator, wobei die Kunststoffschicht und ggf. auch Sicherheitsmerkmale wie Sicherheitsfäden mittig zugeführt wird und die beiden Papierlagen von oben respektive von unten.

Soll ein Fester ausgelassen werden, so muss in den Prozess ein Aussparungsaggregat eingebaut werden, in welchem z.B. mit Laser, Wasserstrahl, unter Stanzen oder ähnlichem die Aussparungen in den Papierbahnen registriert vorgenommen werden.

Weitere bevorzugte Ausführungsformen des erfindungsgemässen Verfahrens sind in den weiteren abhängigen Ansprüchen beschrieben.

Zudem betrifft die vorliegende Erfindung die Verwendung eines derartigen Druckträgers als Sicherheitspapier, insbesondere als Banknote, Check, Ticket, Zertifikat, Aktiendokument, Obligationendokument, Urkunden, Ausweispapiere, Verpackungsmaterial, Etikettenmaterial, Umschlagmaterial, Abdeckungsmaterial etc..

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: ein Mehrschichtlaminat mit mittlerer Kunststoffschicht nach dem Stand der Technik in einem Schnitt ;
- Fig. 2: ein Mehrschichtlaminat mit mittlerer Kunststoffschicht gemäss der Erfindung in einem Schnitt;
- Fig. 3: eine Aufsicht auf ein Mehrschichtlaminat;
- Fig. 4: einen Schnitt gem. Fig. 2 in einer alternativen Darstellung ;
- Fig. 5: einen Schnitt gem. Fig. 4, wobei Randverschmelzungen dargestellt sind ;
- Fig. 6: a) einen Schnitt durch ein Ausführungsbeispiel mit nur einer Papierlage und Aussparungen im Randbereich, b) einen Schnitt gem. Fig. 4, wobei wenigstens ein an den Rand grenzendes Fenster dargestellt ist und beidseitig Papier angeordnet ist; c) eine Aufsicht auf Teile eines Substrats gem. Fig. 6b) ;
- Fig. 7: einen Schnitt durch ein Mehrschichtlaminat mit verschiedenen Aussparungen ;
- Fig. 8: einen Schnitt durch ein Mehrschichtlaminat mit einer Vielzahl von Schichten;
- Fig. 9: a)-c) Schnitte durch Mehrschichtlaminate mit unterschiedlichen Penetrationstiefen, d) einen Schnitt durch ein Mehrschichtlaminat mit lokal unterschiedlichen Penetrationstiefen;
- Fig. 10: a), b) Schnitte durch mehrschichtige Kunststoffschichten ;
- Fig. 11: eine Aufsicht a) sowie einen Schnitt b) durch ein Mehrschichtlaminat mit Diskontinuitäten in der Kunststoffschicht;
- Fig. 12: eine schematische Darstellung der Anordnung der Schichtstruktur vor dem Laminieren;
- Fig. 13: eine Darstellung der Tests zur Ermittlung der Festigkeit der Bindung zwischen den Papierlagen und der Kunststoffschicht ;
- Fig. 14: eine schematische Darstellung des Ausgangsmaterials zur Herstellung eines Druckträgers mit Randverschmelzung ;
- Fig. 15: eine Aufsicht auf ein Mehrschichtlaminat mit einem Fenster respektive einer Aussparung welche die Papierlagen auf der einen Seite vollständig voneinander trennt ;
- Fig. 16: eine Aufsicht auf ein Ausführungsbeispiel mit selbst-verifizierenden Sicherheitsmerkmal ; und
- Fig. 17: eine Aufsicht a) sowie einen Schnitt b) durch ein weiteres Ausführungsbeispiel mit selbst-verifizierenden Sicherheitsmerkmalen.

### WEGE ZUR AUSFÜHRUNG DER ERFINDUNG

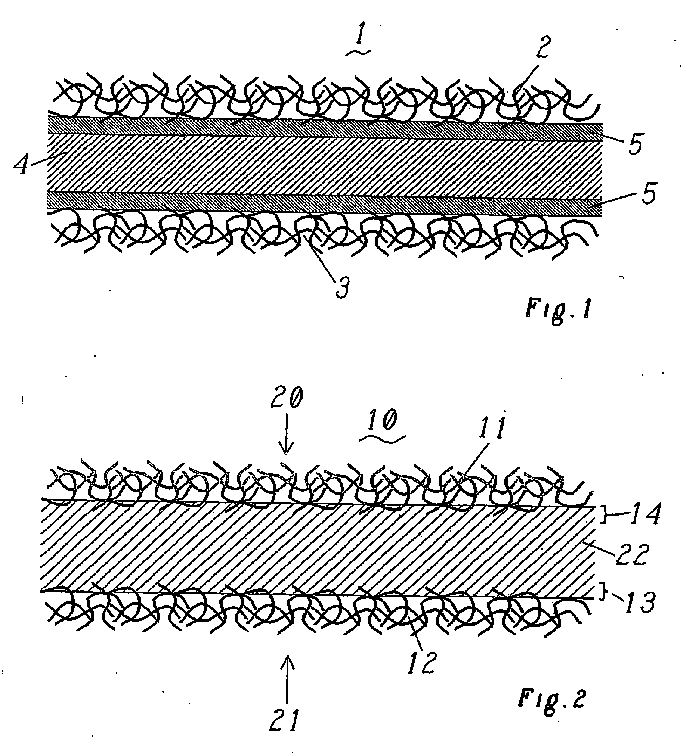

Fig. 1 zeigt einen Schnitt durch einen Druckträger in Form eines Sicherheitspapiers 1 nach dem Stand der Technik. Ein derartiges Mehrschichtlaminat (z.B. in Form eines Sicherheitspapiers) 1 ist beispielsweise in der US 5,449,200 beschrieben. Es handelt sich dabei um eine Schichtstruktur umfassend eine zentrale Kunststoffschicht 4, welche auf beiden Seiten von einer Papierlage 2 respektive 3 bedeckt ist. Als Haftvermittler zur Befestigung der Papierlagen an der Kunststoffschicht 4 wird ein unter UV härtendes reaktives Adhäsiv verwendet, welches als separate Schicht 5 erkennbar ist. Derartige Schichtstrukturen nach dem Stand der Technik weisen das Problem auf, dass sie insbesondere bei der sehr intensiven Benutzung, wie sie bei Banknoten üblich ist, die Tendenz haben, zu delaminieren, d. h. nach einer gewissen Umlaufzeit beginnen die Papierlagen 2,3, sich von der Kunststoffschicht 4 abzulösen. Dieses Delaminieren resultiert unter anderem aus dem häufigen Falten von Banknoten.

Fig. 2 zeigt nun einen erfindungsgemässen Druckträger 10. In diesem Fall ist eine zentrale Kunststofffolie oder Kunststoffschicht 22 aus einem (auch mehrlagigen) thermoplastischen, transparenten Kunststoff direkt auf der Oberseite 20 sowie auf der Unterseite 21 mit Papierlagen 11 respektive 12 bedeckt. Die Kunststoffschicht 22 ist hier als einzige Schicht dargestellt, kann aber auch aus mehreren Schichte bestehen. Ein Adhäsiv wird zur Haftvermittlung nicht verwendet, die Verbindung zwischen Papierlagen 11 respektive 12 und der Kunststoffschicht 22 wird in diesem Fall durch Penetrationszonen 13 und 14 gewährleistet. In diesen Penetrationszonen 13, 14 durchdringt das Material der Kunststoffschicht 22 die jeweilige Papierlage bis in eine bestimmte Tiefe. Ein gewisser Teil der Papierlagen ist entsprechend in einer Matrix von Kunststoff mehr oder weniger vollständig eingebettet, sodass eine äusserst beständige und innige Verbindung zwischen den einzelnen Lagen gewährleistet wird. Diese gewissermassen "verschmolzenen" Zonen 13 respektive 14 (unter dem Begriff verschmolzen ist hier zu verstehen, dass in diesen Zonen die Kunststoffschicht gewissermassssen als Matrix Teile der Papierschicht umgibt) dürfen aber nicht völlig in die Papierlagen 11 respektive 13 hineinreichen, da ansonsten die Oberflächeneigenschaften der Papierlagen auf den der Kunststoffschicht 22 abgewandten Seiten modifiziert werden.

Bei den Papierlagen 11 und 12 handelt es sich z.B. um ein banknotenähnliches Papier mit einem Flächengewicht von 40g/m², möglich ist aber grundsätzlich ein Gewicht im Bereich von 20 bis 50 g/m² oder von 5 bis 500 g/m². Die Papierlagen 11 und 12 enthalten entsprechend als Hauptfasermaterial cellulosische Materialien wie Baumwolle und sind z.B. auf einer Rundsiebmaschine hergestellt. Das Papier einer dieser Lagen enthält z.B. ein Graustufen-Wasserzeichen, eine besonders grosse Sicherheit kann optional dadurch gewährleistet werden, indem in den beiden Papierlagen 11 respektive 12 unterschiedliche Wasserzeichen in registrierter Art und Weise angeordnet sind.

Bei der Kunststoffschicht 22 handelt es sich um eine Folie z.B. der Dicke 40 µm aus vollamorphem, transparenten Polyamid. Derartige Folien können beispielsweise bei der EMS-CHEMIE (CH) unter dem Handelsnamen GRILAMID^{®} TR90 LX oder unter dem Namen GRIVORY^{®} G21 bezogen werden.

Das Mehrschichtlaminat oder Sicherheitspapier gemäss Fig. 2 wurde hergestellt, indem die drei Lagen in einem Laminatoder übereinander gelegt wurden, anschliessend 30 Sekunden aufgeheizt wurde und dann auf dieser Temperatur 30 Sekunden lang gepresst wurde. Dabei zeigte sich, dass bei der Verwendung von GRIVORY^{®} G21 eine Temperatur von 120 °C zur Verschmelzung mit dem Papier genügend war, während bei der Verwendung von GRILAMID^{®} TR90 LX eine Temperatur von 180 °C besser war. Die Verwendung von GRILAMID^{®} TR90 LX führte aber zu mechanisch stabileren Trägern. In der Phase erhöhten Druckes wurde mit einem Druck von ca. 1MPa gearbeitet (Fläche von 0.2 * 0.2 m, 4 Tonnen).

In einem kontinuierlichen Rollenprozess kann mit einem Liniendruck im Bereich von 1-500 N/mm gearbeitet werden.

Ein Vergleich der mechanischen Eigenschaften des Sicherheitspapiers gemäss Fig. 2 mit dem Träger einer Schweizer 100 SFr. Banknote ist in Tabelle 1 dargestellt.

| **Eigenschaft** | **Einheit** | **Laminat** | **100sFr.-Note** |
|---|---|---|---|
| **Gewicht** | **g/m²** | **105** | **91** |
| **Dicke** | **µ** | **115** | **113** |
| **Spez. Volumen** | **cm³/g** | **1.09** | **1.25** |
| **Berstdruck** | **kPa** | **340** | **360** |
| **Bruchkraft** | **längs** | **117** | **106** |
| **Bruchkraft** | **quer** | **89** | **63** |
| **Bruchkraft** | **mittel** | **103** | **84** |
| **Falzzahl** | **längs** | **11000** | **2162** |
| **Falzzahl** | **quer** | **3750** | **2088** |
| **Elmendorf (1BI)** | **längs** | **910** | **1000** |
| **Elmendorf (1BI)** | **quer** | **1006** | **1200** |
| **Steifigkeit, Balken** | **längs** | **0.79** | **0.56** |
| **Steifigkeit, Balken** | **quer** | **0.53** | **0.25** |

Dabei ist erkennbar, dass insbesondere die Falzzahl des neuen Sicherheitspapiers massiv überlegen ist, sowie in Bezug auf das Aussehen und die mechanischen Eigenschaften nach einer vollständigen Durchnässung (Waschmaschinentest).

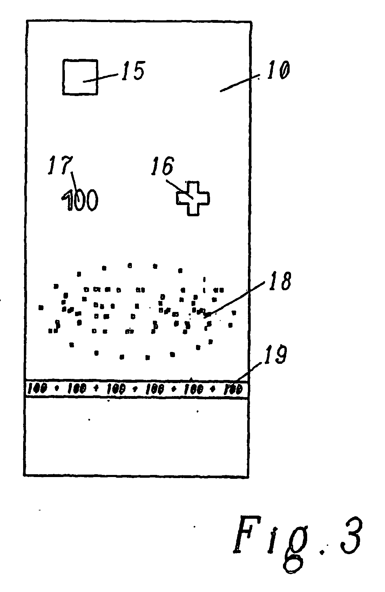

Fig. 3 zeigt einen weiteren wesentlichen Aspekt der vorliegenden Erfindung, nämlich dass das erfindungsgemässe Laminat besonders gut mit unterschiedlichsten Sicherheitsmerkmalen kombiniert werden kann. So können beispielsweise in einer oder in beiden Papierlagen Sicherheitsstreifen 19 eingebaut werden, es ist möglich, wie bereits weiter oben erwähnt, in wenigstens einer der Papierlagen Wasserzeichen 18 vorzusehen, die bei transparenter Kunststoffschicht 22 sehr gut sichtbar sind. Ausserdem, und dies ist wohl eine der hervorstechenden Eigenschaften dieses Laminates, ist es möglich, Fenster als Sicherheitsmerkmale vorzusehen. Fenster bedeutet, dass die Papierlagen im Bereich des Fensters eine Aussparung aufweisen, während die Kunststoffschicht durchgängig ist. Beispielsweise ist mit dem Bezugszeichen 15 ein rechteckiges Fenster angegeben, das Fenster kann aber auch eine komplexe Aussenlinie aufweisen, wie dies beispielsweise mit der Zahl (Bezugszeichen 17) als auch mit dem Schweizer Kreuz (Bezugszeichen 16) illustriert wird.

Derartige Fenster lassen nun ausserdem äusserst interessante Kombinationen von Sicherheitsmerkmalen zu. So ist es beispielsweise möglich, die Kunststofffolie 22 polarisierend auszugestalten. Wird nun die Banknote 10 derart gefaltet, dass das Fenster 15 über das Zeichen 17 zu liegen kommt (Faltlinie parallel zur kurzen Seite der Banknote), so ist es möglich, durch beide Fenster hindurch zu sehen, da die beiden Polarisationsrichtungen parallel liegen. Wird nun aber das Fenster 15 durch Falten der linken oberen Ecke nach schräg rechts unten über das Fenster 16 gelegt, so werden die beiden Polarisationsrichtungen orthogonal liegen und entsprechend die beiden Fenster in Durchsicht dunkel erscheinen. Komplexere Effekte können erreicht werden, wenn ausserdem unterschiedliche Farben ins Spiel gebracht werden, und wenn ausserdem in den Bereichen verschiedener Fenster unterschiedliche Polarisationsrichtungen ausgebildet werden.

Diese geometrische Anordnung von einem Sicherheitsmerkmal mit polarisierenden Eigenschaften und dessen Verifikationsmittel auf einer Banknote ist an sich und unabhängig von dem hier beschriebenen Laminat eine eigenständige Innovation. Sie könnte beispielsweise auch unter Zuhilfenahme von einem Laminat mit Adhäsiven zur Befestigung der Papierbahnen Anwendung finden.

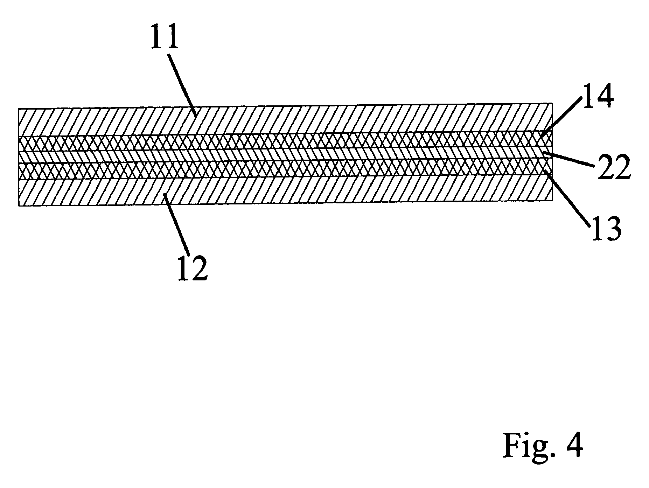

Zur weiteren Illustrationen zeigen die Figuren 4 bis 11 unterschiedliche Möglichkeiten der Mehrschichtlaminate und der Anordnung von Fenstern im weiteren Sinne.

Fig. 4 zeigt nochmals in schematischer Darstellung ein Mehrschichtlaminat 21 analog zu Fig. 2, wobei diesmal die unterschiedlichen Schichten schraffiert dargestellt sind.

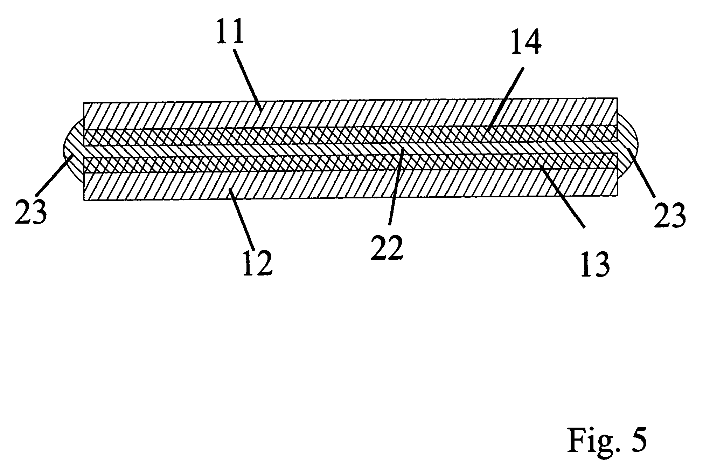

Ein besonders bevorzugtes Ausführungsbeispiel ist in Fig. 5 dargestellt. In diesem Fall befindet sich am Rand des Objekts eine Randverschmelzung 23. Eine derartige Randverschmelzung 23 erhöht die Einreissfestigkeit substanziell. Sie kann auf unterschiedlichen Wegen gehalten werden. Beispielsweise ist es möglich, die Kunststoffschicht 22 etwas grösser auszuschneiden als die beiden Papierlagen 11 respektive 12. Beim anschliessenden Laminieren verschmilzt der überstehende Kunststoffbereich mit dem Rand, wie dies in Fig. 5 dargestellt ist.

Alternativ ist es auch möglich, einen derartigen Träger in kontinuierlicher Weise herzustellen und anschliessend in entsprechende Stücke zu zerschneiden (z. B. in einzelne Banknoten, Glückwunschkarten etc.). Dieses Schneiden kann nun entweder unter Verwendung von erhöhter Temperatur (heisses Schneidwerkzeug), gegebenenfalls in Kombination mit der Anwendung von erhöhtem Druck, geschehen. Dies so, dass in den Randbereichen die Kunststoffschicht 22 etwas aus dem Bereich der Papierlagen 11 respektive 12 herausgepresst wird und eine Randverschmelzung 23 resultiert.

Weiterhin ist es möglich, nach dem Zuschneiden in einem separaten Prozess eine zusätzliche Lamination des Randes vorzunehmen, wobei wiederum Teile der Kunststoffschicht 22 zwischen den Papierlagen herausgepresst werden und zur Randverschmelzung 23 Anlass geben.

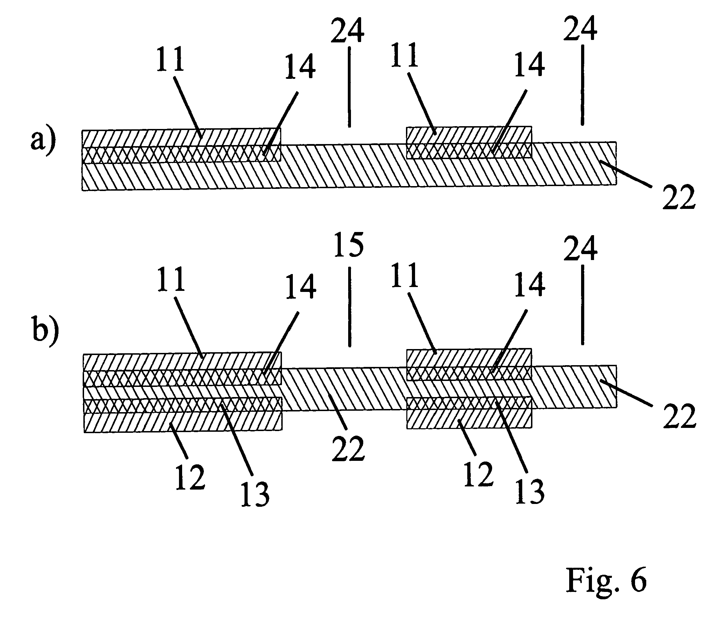

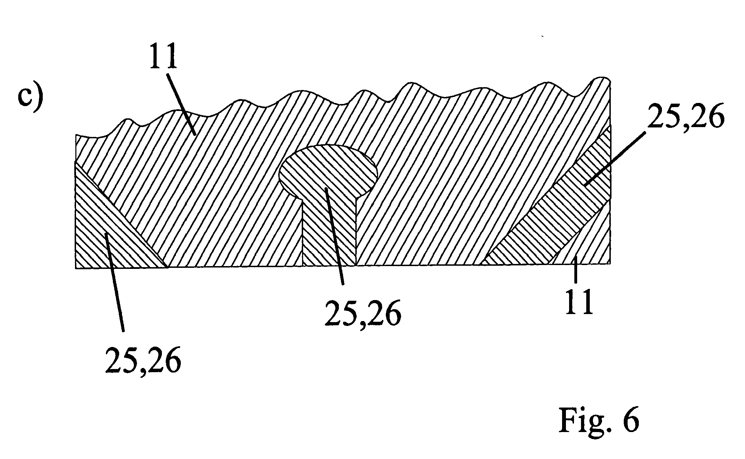

Fig. 6 zeigt, dass es auch möglich ist, nur auf der einen Seite eine Papierlage vorzusehen. Ausserdem ist illustriert, dass nicht nur vollständig von Papier der Papierlage 11 umschlossene Fenster möglich sind, sondern auch Randbereiche 24, 25, 26 mit freiliegendem Kunststoff. Die Formen können dabei unterschiedlichster Art sein, so beispielsweise ganze Streifen entlang des Substrats am Rand, bei welchen der Kunststoff entweder einseitig oder beidseitig freiliegt. Auch entsprechende Ecken oder beliebige in den Druckträger hineinragenden Formen (beispielsweise in Fig. 6c in der Mitte dargestellt) sind möglich.

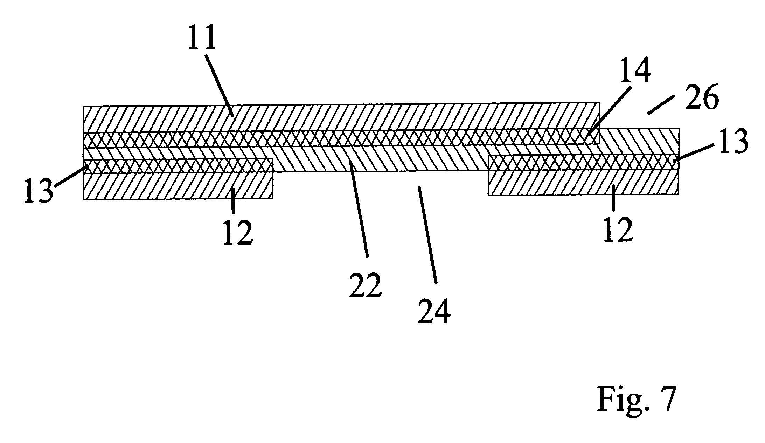

Fig. 7 dient der Illustration, dass auch Aussparungen 24,26 in nur einer der beiden Papierlagen 11 respektive 12 möglich sind. In diesen Bereichen liegt anschliessend die Kunststofffolie 22 frei, so ist entweder dann im Bereich 24 respektive 26 ein höherer Glanz sichtbar, es ist aber auch insbesondere möglich, in diesen Bereichen spezielle Sicherheitsmerkmale, welche in oder auf (z.B. opt. wirksame Gitter) der Kunststofffolie vorhanden sind, erscheinen zu lassen. Auch ist es möglich, beispielsweise bei der mittleren, nach unten offenen Aussparung 24 von Fig. 7 einen Druck oder ein anderes Sicherheitsmerkmal auf der Unterseite der Papierlage 11 im Bereich der Aussparung 24 anzuordnen. Ein derartiger Druck ist anschliessend durch die darüberliegende Kunststofffolie 22 vollständig geschützt.

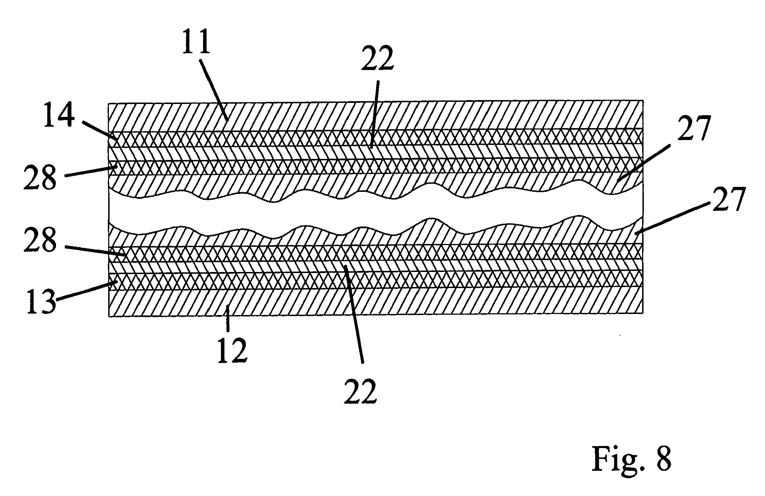

Fig. 8 dient der Illustration, dass nicht nur einfache Laminate mit 2 oder 3 Schichten denkbar sind, sondern dass ein derartiger Aufbau auch mehrschichtig mit beispielsweise 4 und mehr Lagen aufgebaut sein kann.

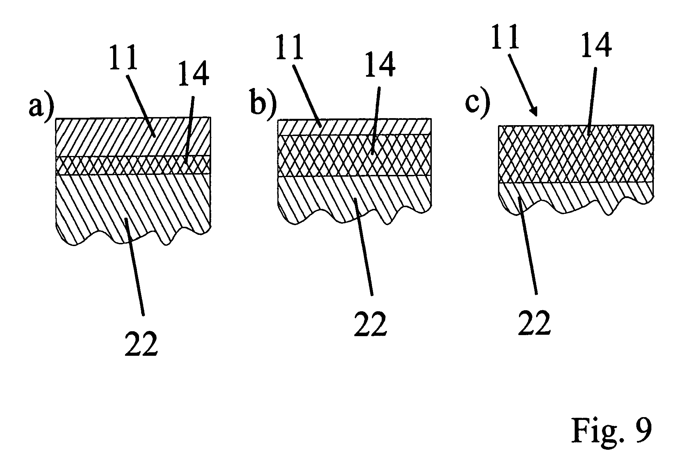

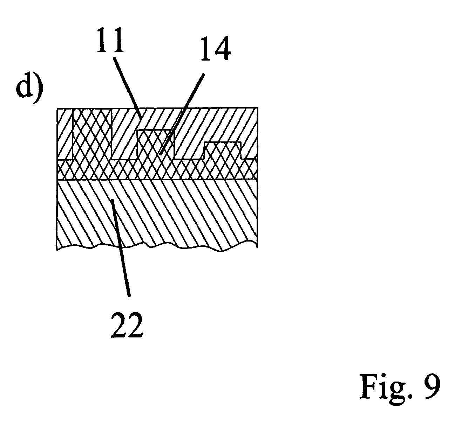

Fig. 9 zeigt, wie die Penetrationszonen unterschiedliche Tiefe aufweisen können. Es zeigt sich, dass typischerweise für eine konventionelle Bedruckbarkeit mindestens 10 Mikrometer des Papiers im wesentlichen nicht von Kunststoff durchdrungen sein sollten (d. h. der nicht doppelt schraffierte obere Bereich in den Figuren 9a respektive b sollte eine Dicke von wenigstens 10 Mikrometer aufweisen). Typischerweise beträgt die nicht von Kunststoff durchtränkte Dicke der Papierlagen weniger als 30 Mikrometer. Für eine vollständige Versiegelung ist es aber auch möglich, wie dies in Fig. 9c) dargestellt ist, die Papierlage vollständig mit dem Kunststoff zu durchtränken.

Eine weitere Besonderheit ist in Fig. 9d dargestellt. Durch eine lokal unterschiedliche Strukturierung der Penetrationszonen 14 (bereichsweise unterschiedliche Dicken) können auf der einen Seite unterschiedliche Opazitäten erhalten werden, es ist aber auch möglich, beispielsweise Zeichen für Sehbehinderte auf diese Weise zu ermöglichen (lokal unterschiedliche haptische Eigenschaften). Derartige lokale Penetrationszonen können beispielsweise durch regional unterschiedliches Heissstempeln (hot stamping) gehalten werden.

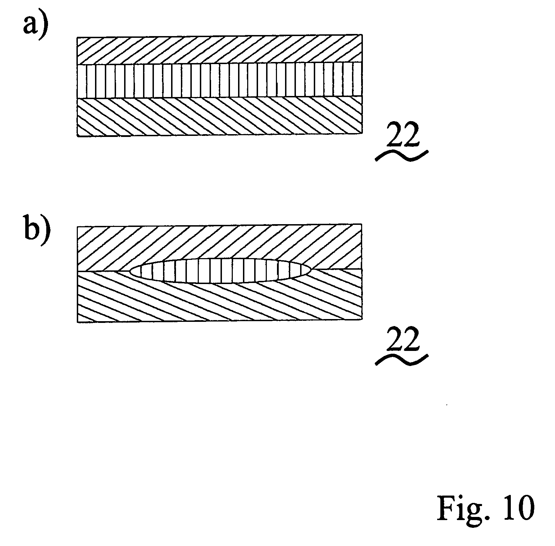

Fig. 10 dient der Illustration, dass die Kunststoffschicht 22 auch aus mehreren Schichten aufgebaut sein kann. Diese Schichten müssen sich dabei nicht, wie in Fig. 10a) dargestellt, über die gesamte Fläche der Kunststofflage 22 erstrecken, sondern können auch, wie in Fig. 10b dargestellt, im Sinne von Einschlüssen (z. B. linsenförmig, streifenförmig etc.) lokal vorhanden sein.

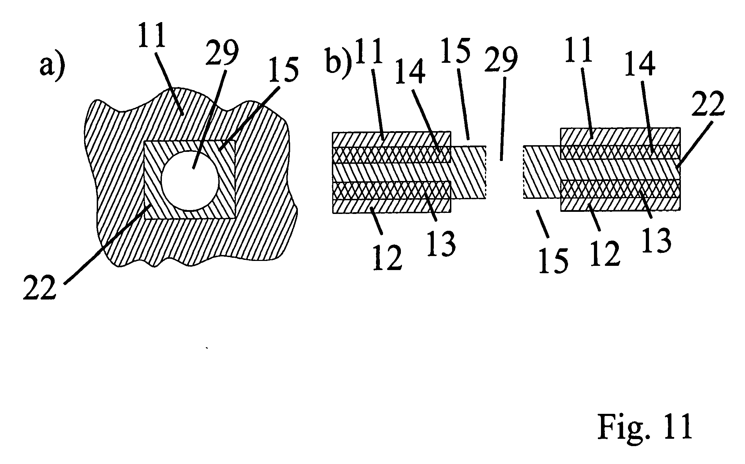

In Fig. 11 ist dargestellt, dass die Kunststoffschicht auch ihrerseits strukturiert sein kann. Möglich ist beispielsweise Embossing, Prägung, Gitter etc.. Hier ist insbesondere ein durchgängiges Loch 28 dargestellt, wie es beispielsweise bei einem gelochten Dokument mit vor Einreissen gesichertem Rand denkbar ist.

Zur Illustration des erfindungsgemässen Gegenstands wurden weitere Ausführungsbeispiele hergestellt und ausgemessen. Dabei wurden folgende Materialien verwendet:
Papier:
   - Papier A: 80 g/m², recycliertes Xerox-Papier.
   - Papier B: 50 g/m², landqart, Landquart, Schweiz.
   - Papier C: 40 g/m², landqart, Landquart, Schweiz.
   - Papier D: 20 g/m², Velina Molto RU, Orema Spa; Ormea.
   - Papier E, Kimwipes^{®}, Kimberly-Clark Corp.
Polymere:
   - Grivory^{®} G21 film, 30 µm Dicke (EMS Chemie, Schweiz),
   - Grilamid^{®} TR 90 LX Film 30 µm und 60 µm Dicke (EMS Chemie, Schweiz),
   - Grilamid^{®} ELY 60 (EMS Chemie, Schweiz),
   - Isotaktisches Polypropylen Moplen^{®} FLF20 (Basell Polyolefins Co. NV, Hoofdorp, NL),
   - Surlyn^{®} K-based (E.I. DuPont De Nemours & Co., Wilmington, Delaware, USA),
   - Surlyn^{®} Na-based (E.I. DuPont De Nemours & Co., Wilmington, Delaware, USA),
   - Nylon 11 (Polysciences, Inc. Warrington, PA, USA),
   - Kynar^{®} (Atochem North America, Inc., Philadelphia, PA, USA),
   - Poly(ethylen-co-methylacrylat) (Aldrich Chemical Co.. Inc. Miwaukee, WI, USA).

Allgemein wurden dabei folgende Verfahren verwendet:
*Polymerfilme*: Die Filme wurden in einem Druckschmelzverfahren bei folgenden Temperaturen hergestellt:
   - Grilamid^{®} ELY 60: 180 °C,
   - Isotaktisches Polypropylen: 200 °C,
   - Surlyn^{®} K: 125 °C,
   - Surlyn^{®} Na: 125 °C,
   - Nylon 11: 200 °C,
   - Kynar^{®}: 200 °C,
   - Poly(ethylen-co-methylacrylat): 125 °C.

Eine Carverpresse, Modell M 25T wurde dazu verwendet. Der angelegte Druck war 2 MPa während einer Zeit von 5 min, gefolgt von einem Abkühlen auf Raumtemperatur. Es wurden Filme einer Dicke von ungefähr 80 µm erhalten.

*Papier*/*Polymer*/*Papier Laminate*: Schichtstrukturen von Lagen aus Papier/Polymer/Papier wurden zusammengestellt und in die geheizte Carverpresse zwischen zwei Kupferplatten gelegt, und zunächst während 30 sec ohne Anlegen von Druck belassen. Anschliessend wurden unterschiedliche Drücke während unterschiedlichen Zeiträumen angelegt. Die Temperatur während der Druckphase bei den unterschiedlichen Beispielen war im Bereich von 125 °C bis 250 °C. Anschliessend wurden die Beispiele auf Raumtemperatur abgekühlt.

*Charakterisierung*: Reissfestigkeit, Elastizitätsmodul, und Reissdehnung von ausgewählten Beispielen wurden ermittelt aus Spannungsdehnungsdiagrammen, welche durch Zugversuche bei Raumtemperatur (23°C) erhalten wurden. Dafür wurde ein Instron Zugmessgerät (Modell 4464) verwendet. Die Probenlänge zu Beginn war 12.5 mm, die Breite 2 mm und die Geschwindigkeit des Kreuzkopfes betrug 10 mm/min. Berstdruck (DIN ISO 2758), Bruchkraft, Doppelfalzzahl (Tappi T423), Reissfestigkeit (DIN EN 21974) und Steifigkeit (DIN 53121) wurden in Standardverfahren für einige ausgewählte der Proben gemessen, jeweils entsprechend der in Klammern angegebenen Norm.

### Beispiel 1

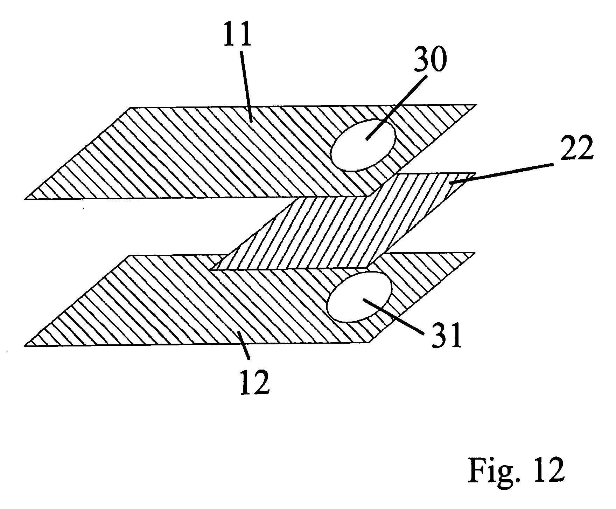

Proben von 20 mm x 100 mm von Papier A wurden ausgeschnitten, und ein Loch von 5 mm Durchmesser wurde jeweils an einem Ende von jedem Stück ausgestanzt. Anschliessend wurde ein Stück Polymerfilm von 20 mm x 40 mm x 0.1 mm ausgeschnitten und zwischen die beiden Papierlagen A gelegt, wobei die beiden Papierlagen derart übereinander gelegt wurden, dass die Löcher übereinander zu liegen kamen (vgl. Figur 12). Diese Schichtstruktur wurde zunächst zwischen zwei Polyimidfilme gelegt, um ein Kleben an den Kupferplatten der Presse zu verhindern. Anschliessend wurde die Kompression während 2 min bei 0.5 MPa für die verschiedenen Polymere bei folgenden Temperaturen durchgeführt: Grilamid^{®} TR 90 LX: 155 °C und 200 °C, Surlyn^{®} K: 125 °C, Surlyn^{®} Na: 125 °C, Nylon 11: 155 °C und 200 °C, Poly(ethylen-co-methylacrylat): 125 °C.

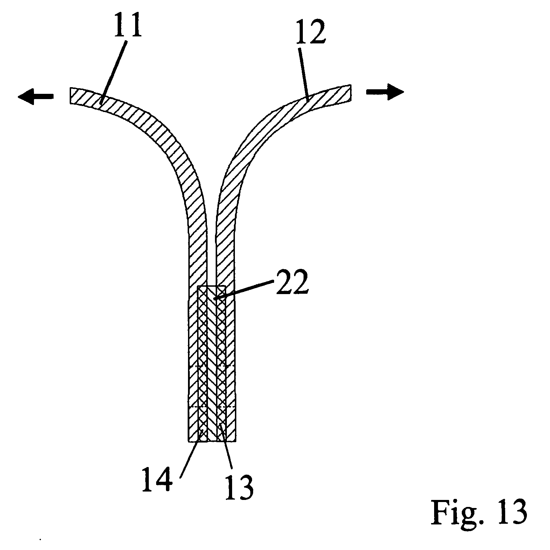

In allen Fällen wurde eine starke Bindung zwischen den Papierlagen und dem Polymer erhalten. Die zwei Bereiche des Papiers, welche nicht durch eine Polymerlage verbunden waren, wurden auseinandergerissen (vgl. Figur 13.) dies führte in jedem der Fälle zu einem Riss innerhalb der Papierlagen (Kohäsionsbruch im Papier) und nicht zu einer Delamination des Mehrschichtlaminates. Das Mehrschichtlaminat zeigte ein durchsichtiges Polymerfenster im Bereich der 2 Fenster der Papierlagen.

### Beispiel 2

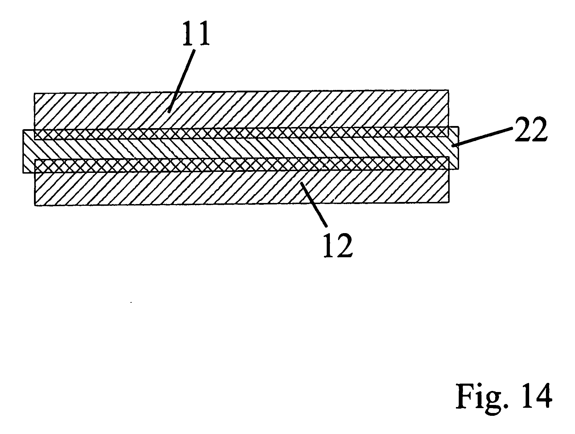

Beispiel 1 wurde wiederholt, aber es wurde ein grösseres Stück aus Grilamid^{®} TR 90 LX von 24 mm x 44 mm x 0.1 mm ausgeschnitten. Wiederum wurde dieses Stück zwischen zwei Papierlagen aus Papier A gelegt, wobei nun jeweils ein kleiner Bereich des Polymer-Films über den Rand der Papierlagen hinausragte (vgl. Figur 14). Die Anwesenheit des daraus resultierenden Verschmelzungsbereiches 23 im Bereich des Randes erhöhte die Einreissfestigkeit (insbesondere die Auslösung des Risses) des entsprechenden Mehrschichtlaminates dramatisch wenn verglichen mit Beispiel 1.

### Beispiel 3

Beispiel 1 wurde wiederholt, aber an Stelle eines Fensters von 5 mm wurden Fenster mit einem Durchmesser von bis zu 16 mm hergestellt. In allen Fällen wurden zufriedenstellende Mehrschichtlaminate mit exzellenten mechanischen Eigenschaften erhalten.

### Beispiel 4

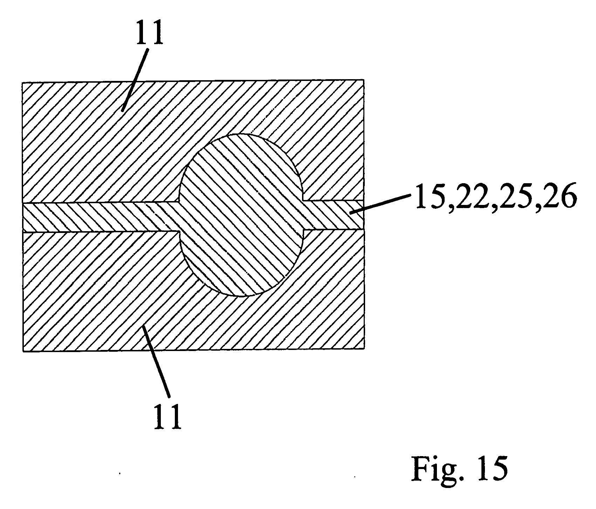

Beispiel 1 wurde wiederholt, aber an Stelle eines Fensters von 5 mm wurde eine Struktur hergestellt, bei welcher die 2 Papierlagen nicht kontinuierlich waren (vgl. Figur 15). Auch in diesen Fällen wurden zufriedenstellende Mehrschichtlaminate, mit guten mechanischen Eigenschaften erhalten.

### Beispiel 5

Papier/Polymer/Papier Laminate wurden hergestellt wie unter Beispiel 1 beschrieben, aber unter Verwendung von Papier B und Grilamid^{®} TR 90 LX bei 200 °C. Anschliessend wurde das Mehrschichtlaminat in kochendes Wasser getaucht und während 30 Minuten unter heftigen Rühren gehalten. Als Referenz wurde ausserdem ein Blatt Papier (Papier B) den gleichen Bedingungen ausgesetzt. Dieses Referenz-Blatt zersetzte sich unter diesen Bedingungen vollständig, während das Mehrschichtlaminat intakt verblieb und keine Delamination zeigte, weder während der Behandlung noch danach.

### Beispiel 6

Papier C/Grivory^{®} G21 30 µm Film/Papier D Laminate von 80 mm x 150 mm wurden hergestellt wie unter Beispiel 1 dargestellt, wobei bei 150 °C und 0.5 MPa während 1, 2 respektive 10 min laminiert wurde. Anschliessend wurde die Reissfestigkeit der Mehrschichtlaminate wie oben angegebenen gemessen. Im wesentlichen wurden keine Unterschiede zwischen den verschiedenen Mehrschichtlaminaten gefunden, und es wurden Reissfestigkeiten von ungefähr 11 km gemessen, was im wesentlichen dem Wert von Papier D entspricht und 50 % höher liegt als beim Polymerfilm allein und 30 % höher als bei Papier C. Die verschiedenen Mehrschichtlaminate zeigten unterschiedliche visuelle Erscheinung und unterschiedliche Oberflächenstruktur. So zeigten Mehrschichtlaminate, welche bei einer Laminationszeit von 10 min hergestellt worden waren, Polymer an der Oberfläche des Papiers, was anzeigt, dass das geschmolzene Polymer durch das Papier unter diesen Bedingungen mindestens teilweise hindurch diffundiert. Dies äusserte sich in einer glänzenden Erscheinung und in einer glatteren Oberfläche und in glatteren haptischen Eigenschaften.

### Beispiel 7

Laminate von 80 mm x 150 mm von Papier C/Grilamid^{®} TR 90 LX 60 µm Film/Papier D (Laminat I) und von Papier C/Grilamid^{®} ELY 60 /Papier D (Laminat II) wurden hergestellt wie unter Beispiel 1 beschrieben, wobei bei 180 °C und einem Druck von 0.75 MPa während einer Zeit von 1 min laminiert wurde. Eine Anzahl von verschiedenen Parametern wurde mit den oben beschriebenen Methoden ausgemessen. Zum Vergleich wurden die gleichen Eigenschaften bei einem Papier gemessen, wie es bei der Herstellung einer konventionellen 100sFr Banknote Anwendung findet (Referenz).

Testkonditionen: 23 °C und 50% relative Feuchte (Prüfraumkonditionen)

| **Methode** | **Eigenschaft** | **Unit** | **Laminat I** | **Laminat II** | **Referenz** |
|---|---|---|---|---|---|
| **DIN EN ISO 536** | Gewicht | **g/m²** | 109 | 105 | 91 |
| **DIN EN 20534** | Dicke | **µm** | 116 | 119 | 113 |
| **DIN EN 20534** | Spez.Volumen | **cm³/g** | 1.07 | 1.13 | 1.25 |
| **DIN ISO 2758** | Berstdruck | **kPa** | 415 | 300 | 360 |
| **DIN EN ISO 1924-2** | Bruchkraft-längs | **N** | 145 | 87 | 106 |
| **DIN EN ISO 1924-2** | Bruchkraft-quer | **N** | 73 | 60 | 63 |
| **Tappi T 423** | Falzzahl-längs | - | 21'531 | 35'589 | 2'162 |
| **Tappi T 423** | Falzzahl-quer | - | 22'138 | >50'000 | 2'088 |
| **DIN EN 21974** | Elmendorf (1 Blatt)-längs | **mN** | 846 | 1'133 | 1'093 |
| **DIN EN 21974** | Elmendorf (1 Blatt)-quer | **mN** | 942 | 974 | 1'416 |
| **DIN 53123** | Steifigkeit, Balken-längs | **Nmm** | 1.32 | 0.48 | 0.56 |
| **DIN 53123** | Steifigkeit, Balken-quer | **Nmm** | 0.54 | 0.59 | 0.25 |

Die Daten belegen, dass die Mehrschichtlaminate tatsächlich überragende Eigenschaften zeigen, und in mancher Hinsicht die Eigenschaften einer Banknote nach dem Stand der Technik übertreffen. So beispielsweise in Bezug auf den Berstdruck, die Bruchkraft und die Steifigkeit. Besonders bemerkenswert ist die Erhöhung respektive Verbesserung der Falzzahl-Werte für das Mehrschichtlaminat.

### Beispiel 8

Beispiel 7 wurde wiederholt, und Mehrschichtlaminate aus Papier C/Grilamid^{®} TR 90 LX 60 µm Film/Papier D wurden hergestellt. Sie hatten ein transparentes Fenster einer Grösse von 10 mm x 10 mm. Die Doppefalzzahl wurde in einem Bereich bestimmt, in welchem das Fenster angeordnet war. Dazu wurde so vorgegangen, dass ein Teststreifen so zugeschnitten wurde (respektive derart positioniert wurde), dass die Falzung im Fenster und im umgebenden Papier erfolgte (entsprechend Tappi T 423). Der resultierende Wert der Doppelfalzzahl betrug 7510.

### Beispiel 9

Beispiel 8 wurde wiederholt, und Mehrschichtlaminate aus Papier C/Grilamid^{®} TR 90 LX 60 µm Film/Papier D wurden hergestellt. Sie hatten ein transparentes Fenster einer Grösse von 10 mm x 10 mm. Die Laminate wurden anschliessend einem Standard-Knittertest unterzogen, wobei ein IGT Crumplingtester 1, 4 resp. 8 mal verwendet wurde. Die Mehrschichtlaminate überstanden diese Tests im wesentlichen unverändert, es wurde keine Delamination beobachtet, auch nicht im Bereich der Fenster. Ausserdem blieben die Fenster transparent.

### Beispiel 10

Beispiel 9 wurde wiederholt, wobei diesmal Papier C ein Wasserzeichen enthielt, während Papier D kein Wasserzeichen aufwies. Das derart hergestellte Mehrschichtlaminat zeigte in erstaunlicher Klarheit und Erkenntlichkeit das Wasserzeichen in Papier C. Erstaunlicherweise erschien das Wasserzeichen im derart hergestellten Mehrschichtlaminat schärfer als im Papier C im unlaminierten Zustand. Dies insbesondere bei Betrachtung unter Reflexion.

### Beispiel 11

Beispiel 9 wurde wiederholt. Die Mehrschichtlaminate wurden in diesen Versuch einem heissen Waschmaschinentest unterzogen, wobei dieser Test bei einer Temperatur von 95 °C während einer Zeit von 1 Stunde in 4 1 Wasser durchgeführt wurden, und wobei diesem Wasser 50 ml eines Standardwaschmittels (Omo) zugefügt wurde. Das Mehrschichtlaminat überstand diesen Test im wesentlichen unverändert, es wurde keine Delamination beobachtet, auch nicht im Bereich des Fensters. Das Fenster überstand den Test, ohne dabei trüb zu werden.

### Beispiel 12

Wässrige Farbstofflösungen einer Konzentration von 0.25 mg/g of Kongorot (Aldrich Chemicals Co., Milwaukee) and Chicago Sky Blue (Sigma Chemical Co., St. Louis) wurden hergestellt, indem jeweils 12.5 mg des Farbstoffs in 50 ml destilliertem Wasser gelöst wurden. 10g Poly(vinylalkohol) (PVA, 98-99% hydrolysiert, gewichtsgemitteltes Molekulargewicht von 10⁵ g/mol, Aldrich Chemicals Co., Milwaukee) wurde während 2 h in 490 ml kochendem destilliertem Wasser gerührt, wobei eine 2% w/w PVA Lösung erhalten wurde. Man liess die Lösung anschliessend auf Raumtemperatur abkühlen. Drei PVA/Farbstoff Blendfilme wurden hergestellt, indem eine bestimmte Menge der entsprechenden Farbstofflösung mit 10 g der 2% w/w PVA Lösung gemischt wurden, und in einem Solution-casting-Prozess in Petrischalen eines Durchmessers von 9 cm bei Raumtemperatur das Wasser verdampft wurde.

Die so hergestellten Filme hatten folgende Zusammensetzungen:
(A) 0.2% w/w Congo Red (bezogen auf Feststoffgehalt), hergestellt durch die Mischung von 1.6 g Kongorot-Farbstofflösung mit 10 g PVA Lösung,
(B) 0.4% w/w Chicago Sky Blue (bezogen auf Feststoffgehalt), hergestellt durch die Mischung von 3.2 g Chicago Sky Blue Farbstofflösung mit 10 g PVA Lösung,
(C) 0.2% w/w Kongorot und 0.4% w/w Chicago Sky Blue (bezogen auf Feststoffgehalt), hergestellt durch eine Mischung von 1.6 g Kongorot Farbstofflösung und 3.2 g Chicago Sky Blue Farbstofflösung mit 10 g PVA Lösung.

Die getrockneten PVA/Farbstoff Blendfilme wurden in Streifen von 2 cm Breite geschnitten, und anschliessend uniaxial gereckt auf einem heissen Schuh (Wagner & Munz, Modell WME) mit einem Zugverhältnis (Verhältnis der Länge nach dem Recken zur Länge vor dem Recken) von 6 bei einer Temperatur von 200 °C. Die erhaltenen polarisierenden Filter zeigten dichroische Verhältnisse von mehr als 50 (bestimmt bei den Absorptionsmaxima im Spektrum) und hatten eine Dicke von typischerweise 15 µ m.

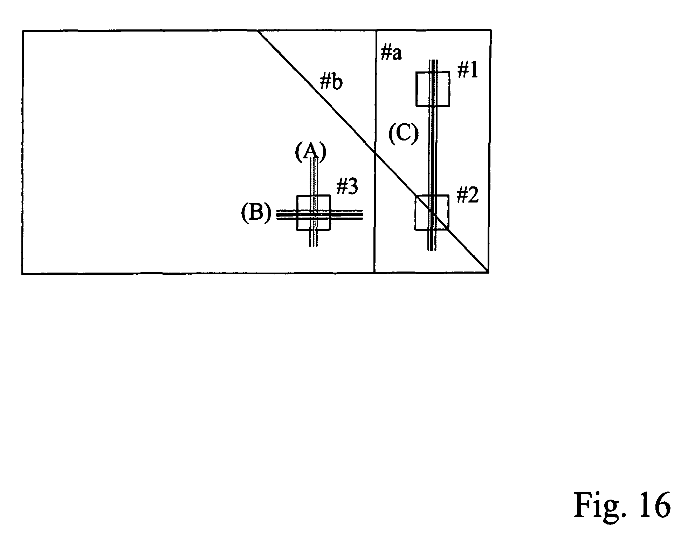

Mehrschichtlaminate einer Grösse von 80 mm x 150 mm bestehend aus Papier C und D, Grivory^{®} G21 Film eine Dicke von 30 µm wurden unter Verwendung der oben beschriebenen dichroischen Filter hergestellt (vergleiche Fig. 16, wobei (A), (B), und (C) sich auf Blendfilme der obigen Zusammensetzungen beziehen). Dabei wurde folgende Schichtstruktur aufgebaut:
1. eine erste Schicht aus Papier C mit 3 Löchern einer Grösse von 10 mm x 10 mm;
2. eine erste Schicht aus Polymerfilm
3. ein Streifen aus dem dichroischen Filter (C), welcher beide Löcher #1 und #2 überdeckt; ein Streifen aus dem dichroischen Filter (A), welcher das Loch #3 derart überdeckt, dass seine Zugrichtung parallel zur Zugrichtung des Streifens (A) ausgerichtet ist;
4. ein Streifen aus dem dichroischen Filter (B) auf der Schicht aus dem dichroischen Filter (A), wobei ebenfalls das Loch #3 überdeckt wurde, und der Streifen (B) derart ausgerichtet wurde, dass die Zugrichtung des Streifens (B) senkrecht zur Zugrichtung des Streifens (C) ausgerichtet war;
5. eine zweite Schicht aus Polymerfilm
6. eine zweite Schicht von Papier D mit Löchern an den entsprechenden Stellen für eine Durchsicht durch das gesamte Mehrschichtlaminat.

Der Stapel wurde bei einer Temperatur von den 120 °C während einer Zeit von 1 min und bei einem Druck von 0.5 MPa laminiert. So wurde ein Mehrschichtlaminat mit drei Fenstern #1, #2 und #3 erhalten, welche alle eine lavendelgraue Farbe zeigten. Bei Betrachtung von Fenster #3 durch das Fenster #1 (indem das Mehrschichtlaminat entlang der Linie #a gefaltet wird), zeigt das Fenster #3 eine blaue Farbe. Im Gegensatz dazu beobachtet man bei Betrachtung von Fenster #3 durch Fenster #2 (indem das Mehrschichtlaminat entlang der Linie #b gefaltet wird), eine rote Färbung von Fenster #3. So kann in einfacher Weise ein selbst-verifizierendes Objekt hergestellt werden.

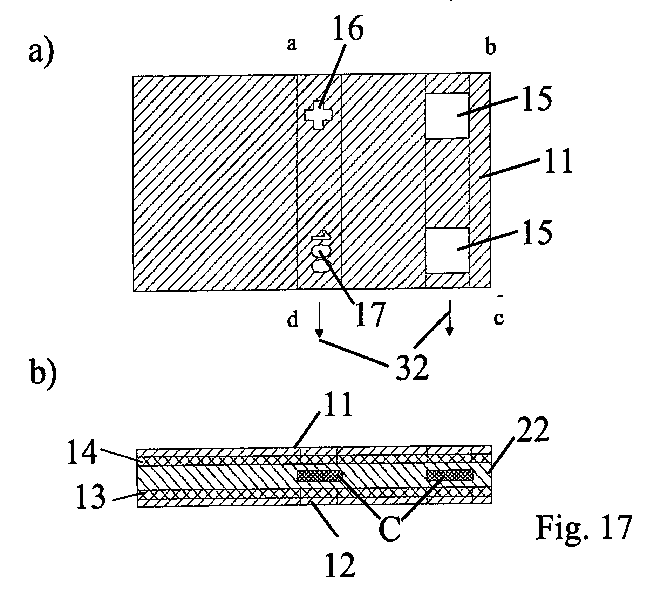

In ähnlicher Weise kann ein Objekt gemäss Fig. 17 hergestellt werden. Hier sind zwei polarisierende Streifen C in das Laminat eingebaut, wobei der Schichtaufbau analog zum obigen Beispiel erhalten wurde.

Wird nun das Objekt gefaltet, sodass die Punkte a und c auf die Punkte b respektive d gelegt werden, so erscheinen das Kreuz sowie die Zahl intransparentem leichtem grau. Wird andererseits Punkt a auf den Punkt d gefaltet, so resultiert infolge der gekreuzten Polarisationsrichtungen ein schwarzes Fenster. Das Gleiche gilt für ein Falten von Punkt c auf Punkt b.

### Beispiel 13

Beispiel 6 wurde wiederholt, wobei aber an Stelle der Papiere C und D Papier E auf beiden Seiten der verschiedenen Polymerfilme verwendet wurde. Auch in diesem Fall wurden exzellente Mehrschichtlaminate erhalten, was belegt, dass derartige Mehrschichtlaminate unter Verwendung von unterschiedlichen Papieren erhältlich sind.

**BEZUGSZEICHENLISTE**

| | |
|---|---|
| 1 | Sicherheitspapier |
| 2 | obere Papierlage |
| 3 | untere Papierlage |
| 4 | Kunststoffschicht |
| 5 | Adhäsiv, Leim |
| 10 | Mehrschichtlaminat, z.B. Sicherheitspapier |
| 11 | obere Papierlage |
| 12 | untere Papierlage |
| 13 | untere Penetrationszone |
| 14 | obere Penetrationszone |
| 15 | Fenster (rechteckig) |
| 16 | Fenster (Form) |
| 17 | Fenster (Zahl) |
| 18 | Wasserzeichen |
| 19 | Sicherheitsstreifen |
| 20 | Oberseite |
| 21 | Unterseite |
| 22 | Kunststoffschicht ("side exposure") |
| 23 | Randverschmelzung |
| 24 | Aussparung |
| 25 | Fenster, angrenzend an Rand des Druckträgers |
| 26 | Aussparung, angrenzend an Rand des Druckträgers |
| 27 | weitere Papierlage(n) |
| 28 | weitere Penetrationszone(n) |
| 29 | Loch in 22 |
| 30 | Loch in 11 |
| 31 | Loch in 12 |
| 32 | Polarisationsrichtung |

## Patentansprüche

1. Mehrschichtlaminat, als Druckträger z.B. als Sicherheitspapier, umfassend:
wenigstens eine, ggf. mehrlagig ausgebildete Kunststoffschicht (22) mit einer Ober- (20) und einer Unterseite (21) ;
wenigstens eine mit der Kunststoffschicht (22) verbundene obere Papierlage (11) auf der Oberseite (20) der Kunststoffschicht (22) sowie wenigstens eine mit der Kunststoffschicht (22) verbundene untere Papierlage (12) auf der Unterseite (21) der Kunststoffschicht (22);
wobei es sich bei der Kunststoffschicht (22) um ein thermoplastisches polymeres Material handelt, und wobei die Verbindung zwischen der oberen Papierlage (11) und der Kunststoffschicht (22) sowie der unteren Papierlage (12) und der Kunststoffschicht (22) im wesentlichen ohne zusätzlichen Haftvermittler durch eine Penetrationszone (14), in welchen Teile der Kunststoffschicht (22) mit der Masse des Faserverbunds der Papierlage (11) verschmolzen sind, gewährleistet ist, und wobei sich die Penetrationszonen (13,14) im wesentlichen nicht bis zu der der Kunststoffschicht (22) abgewandten Oberflächen der Papierlage (11) erstrecken
**dadurch gekennzeichnet dass**
es sich bei wenigstens einer der Papierlagen (11,12) um Papier handelt, welches in einer Rundsiebmaschine oder in einer Langsiebmaschine mit einem Sicherheitsmerkmal in Form eines Wasserzeichens hergestellt wurde.

2. Mehrschichtlaminat nach einen Anspruch 1, **dadurch gekennzeichnet, dass** es sich beim Wasserzeichens, um ein Graustufen-Wasserzeichens (18) handelt, wobei die wenigstens eine der Papierlage (11,12) bevorzugt unter Verwendung von cellulosischem Fasermaterial wie Baumwolle, und/oder Flachs, und/oder Leinen als Hauptfaserrohstoff hergestellt ist.

3. Mehrschichtlaminat nach Anspruch 1 oder 2, **dadurch gekennzeichnet, dass** das polymere Material eine Schmelz- bzw. Fliesstemperatur im Bereich von 100 bis 200 °C aufweist.

4. Mehrschichtlaminat nach einem der Ansprüche 1 - 3, **dadurch gekennzeichnet, dass** die Papierlagen (11, 12) ein Flächengewicht im Bereich 20 bis 50 g/m² aufweisen und der Druckträger insgesamt ein Flächengewicht von im Bereich von 90 bis 150 g/m² aufweist, wobei bevorzugt die Kunststoffschicht (22) eine Dicke im Bereich von 20 bis 50 µm aufweist.

5. Mehrschichtlaminat nach einem der Ansprüche 1-4, **dadurch gekennzeichnet, dass** beide Papierlagen (11, 12) wenigstens eine durchgängige Aussparung (15-17) in wenigstens teilweise überlappender Weise unter Bildung eines Fensters (15-17) aufweisen, sodass die Kunststoffschicht (22) in diesen Bereichen freiliegt, wobei Bereiche vorliegen, in welchen die Kunststoffschicht (22) von beiden Seiten zugänglich ist, und wenigstens ein weiterer Bereich, bei welchem die Kunststoffschicht (22) nur von einer Seite zugänglich ist.

6. Mehrschichtlaminat nach einem der Ansprüche 1-5, **dadurch gekennzeichnet, dass** es sich beim polymeren Material um ein teil-amorphes oder vollamorphes Polyamid, bevorzugt Polyamid 12, handelt, insbesondere bevorzugt um ein Polyamid auf Basis von Polyamid 12 mit einem Polyamid auf der Basis aliphatischer und cycloaliphatischer Bausteine, ggf. mit aromatischen Anteilen.

7. Mehrschichtlaminat nach einen der vorhergehenden Ansprüche, **dadurch gekennzeichnet, dass** es sich bei wenigstens einer der Papierlagen (11,12) um Papier handelt, welches in einer Rundsiebmaschine oder in einer Langsiebmaschine hergestellt wurde unter Verwendung von cellulosischem Fasermaterial wie Baumwolle, und/oder Flachs, und/oder Leinen als Hauptfaserrohstoff.

8. Mehrschichtlaminat nach einem der vorhergehenden Ansprüche, **dadurch gekennzeichnet, dass** das polymere Material eine Glasübergangstemperatur im Bereich von 50 bis 250 °C, bevorzugt im Bereich von 75 bis 225 °C, oder im Bereich von 100 bis 200 °C, insbesondere bevorzugt von 120 bis 180 °C aufweist, oder eine Fliesstemperatur, wenn die Glasübergangstemperatur unterhalb der Raumtemperatur liegt, im Bereich von 50 bis 250 °C, bevorzugt im Bereich von 75 bis 225 °C, oder im Bereich von 100 bis 200 °C, insbesondere bevorzugt von 120 bis 180 °C aufweist, und/oder dass es sich beim polymeren Material um ein insbesondere transparentes, oder eingefärbtes, bevorzugt teil-amorphes oder vollamorphes Polyamid, Polypropylen oder Polyethylen handelt, insbesondere bevorzugt um ein Polyamid auf der Basis aliphatischer und cycloaliphatischer Bausteine, ggf. mit aromatischen Anteilen.

9. Mehrschichtlaminat nach einem der vorhergehenden Ansprüche, **dadurch gekennzeichnet, dass** die Papierlagen (11, 12) ein Flächengewicht im Bereich von 5 bis 500 g/m², bevorzugt im Bereich von 10 bis 80 g/m², insbesondere bevorzugt im Bereich von 20 bis 50 g/m² aufweisen, und dass die Kunststoffschicht (22) eine Dicke im Bereich von 5 bis 500 µm, bevorzugt im Bereich von 10 respektive 20 bis 80 µm, insbesondere bevorzugt im Bereich von 20 bis 50 µm aufweist, wobei insbesondere bevorzugt das resultierende Mehrschichtlaminat respektive der Druckträger insgesamt ein Flächengewicht von im Bereich von 15 bis 1500 g/m², oder 50 bis 500 g/m², bevorzugt im Bereich von 80 bis 180 g/m², oder 60 bis 200 g/m², insbesondere bevorzugt von im Bereich von 90 bis 120 g/m² oder 80 bis 150 g/m² aufweist.

10. Mehrschichtlaminat nach einem der vorhergehenden Ansprüche, **dadurch gekennzeichnet, dass** die Kunststoffschicht (22) wenigstens ein Sicherheitsmerkmal aufweist, wobei dieses Sicherheitsmerkmal in Form eines elektrischen, elektronischen, magnetischen, oder optischen Informationsmittel oder einer Kombination derartiger Informationsmittel besteht, bevorzugt ausgewählt aus: Aufdruck, fluoreszierender Bereich, polarisierender Bereich, polarisiert fluoreszierender Bereich, polarisiert absorbierender Bereich, Hologramm, photochrome Bereiche, Mikroprägung, Mikroperforation, Chip, elektrisch leitender Bereich, magnetischer Bereich, und/oder dass wenigstens eine der Papierlagen (11, 12) ein Sicherheitsmerkmal aufweist, wobei dieses Sicherheitsmerkmal bevorzugt ausgewählt wird aus: Wasserzeichen, insbesondere Graustufen-Wasserzeichen (18); Sicherheitsfaden (19); OVD; Melierfasern; Sicherheitspigmente; irisierende Farbapplikationen, Chip, Magnetstreifen.

11. Mehrschichtlaminat nach einem der vorhergehenden Ansprüche, **dadurch gekennzeichnet, dass** wenigstens eine der Papierlagen (11, 12) eine durchgängige Aussparung (15-17) aufweist, sodass die Kunststoffschicht (22) in diesem Bereich freiliegt, wobei insbesondere bevorzugt beide Papierlagen (11, 12) eine derartige Aussparung in wenigstens teilweise überlappender Weise unter Bildung eines Fensters (15-17), insbesondere bevorzugt mit unregelmässigem respektive gleitenden Rand, aufweisen, wobei bevorzugtermassen wenigstens im Bereich des Fensters (15-17) die Kunststofffolie wenigstens ein Sicherheitsmerkmal aufweist, und wobei insbesondere bevorzugtermassen unter Zuhilfenahme wenigstens eines Fensters, insbesondere mit polarisierenden Eigenschaften, wenigstens ein weiteres Sicherheitsmerkmal, insbesondere mit polarisierenden Eigenschaften, überprüft werden kann.

12. Mehrschichtlaminat nach Anspruch 11, **dadurch gekennzeichnet, dass** im Bereich der Aussparung (15-17) bei der Herstellung eine weitere Kunststofflage mit der gleichen Kontur wie das Fenster in das Fenster hingelegt wird.

13. Mehrschichtlaminat nach einem der vorhergehenden Ansprüche, insbesondere in Form eines Druckträgers mit einer Doppelfalzzahl, welche mehr als doppelt so gross ist, wie die Doppelfalzzahl einer einzelnen Papierlage (11, 12), wobei die Doppelfalzzahl bevorzugt mehr als 5 mal, insbesondere bevorzugt mehr als 10 mal oder sogar mehr als 100 mal so gross ist, wie die Doppelfalzzahl einer einzelnen Papierlage (11, 12).

14. Mehrschichtlaminat nach einem der vorhergehenden Ansprüche, **dadurch gekennzeichnet, dass** das Mehrschichtlaminat wenigstens eine Randkante aufweist, welche wenigstens abschnittsweise über eine Randverschmelzung (23) verfügt, welche die seitliche Randkante wenigstens einer der Papierlagen (11, 12) wenigstens teilweise abdeckt, wobei die Randverschmelzung (23) bevorzugt aus dem Material der Kunststoffschicht (22) gebildet ist.

15. Mehrschichtlaminat nach einem der vorhergehenden Ansprüche, **dadurch gekennzeichnet, dass** die Penetrationstiefe (13, 14) derart ausgebildet ist, dass im wesentlichen wenigstens 10 µm der der Kunststoffschicht (22) abgewandten Oberfläche wenigstens einer der Papierlagen (11, 12) im wesentlichen nicht von Kunststoff durchdrungen sind, wobei bevorzugt die Penetrationstiefe (13, 14) derart ausgebildet ist, dass im wesentlichen wenigstens 15 µm, bevorzugt im wesentlichen wenigstens 20 µm, insbesondere bevorzugt im wesentlichen wenigstens 30 µm, der der Kunststoffschicht (22) abgewandten Oberfläche wenigstens einer der Papierlagen (11, 12) im wesentlichen nicht von Kunststoff durchdrungen sind, und/oder dass die Penetrationstiefe (13, 14) eine Dicke von wenigstens 10 µm, bevorzugt von wenigstens 15 µm, insbesondere bevorzugt von wenigstens 30 µm aufweist.

16. Mehrschichtlaminat nach einem der vorhergehenden Ansprüche, **dadurch gekennzeichnet, dass** die Penetrationstiefe (13, 14) bereichsweise eine unterschiedliche Dicke aufweist.

17. Mehrschichtlaminat nach einem der vorhergehenden Ansprüche, **dadurch gekennzeichnet, dass** die Kunststoffschicht (22) polarisierend und/oder fluoreszierend und/oder phosphoreszierend und/oder optisch brechend ausgebildet ist, wobei insbesondere bevorzugt eine polarisierte Absorption und/oder eine polarisierte Emission vorhanden ist.

18. Druckträger, Verpackungsmaterial, Abdeckmaterial, Sicherheitspapier, insbesondere Banknote, Check, Ticket, Zertifikat, Aktiendokument, Obligationendokument, Urkunde, Ausweisdokument, Zutrittsdokument hergestellt ausgehend von einem Mehrschichtlaminat nach einem der vorhergehenden Ansprüche.

19. Verfahren zur Herstellung eines Mehrschichtlaminates eines Druckträgers nach einem der Ansprüche 1 bis 17, **dadurch gekennzeichnet, dass** in einem Laminator die Papierlagen (11, 12) mit der Kunststoffschicht (22) wenigstens teilweise verschmolzen werden, wobei eine Temperatur von im Bereich von 50 bis 250 °C, bevorzugt im Bereich von 75 bis 225 °C, oder im Bereich von 100 bis 200 °C, insbesondere bevorzugt von 140 bis 180 °C verwendet wird, und ein Druck von im Bereich von 10 Pa bis 10 MPa, bevorzugt von 1kPa bis 10 MPa, oder von 1kPa bis 5 MPa, insbesondere bevorzugt von im Bereich von 0.5 MPa bis 2 MPa verwendet wird.

20. Verfahren nach Anspruch 19, **dadurch gekennzeichnet, dass** zunächst von Raumtemperatur auf die Zieltemperatur erhöht wird und anschliessend vom Normaldruck auf den Zieldruck erhöht wird.

21. Verfahren nach einem der Ansprüche 19 oder 20, **dadurch gekennzeichnet, dass** es sich um einen kontinuierlichen Prozess handelt, bei welchem die einzelnen Träger (11, 12, 22) von Rollen zugeführt werden, und dass es sich beim Laminator um einen Rollenlaminator handelt, wobei die Kunststoffschicht (22) mittig zugeführt wird und die beiden Papierlagen (11, 12) von oben respektive von unten, und wobei insbesondere bevorzugt ein Liniendruck im Bereich von 1 bis 500 N/mm angewendet wird.

22. Verfahren nach einem der Ansprüche 19 bis 21, **dadurch gekennzeichnet, dass** als Kunststoffschicht (22) wenigstens in Bereichen eine gereckte Folie mit polarisierenden Eigenschaften verwendet wird.

23. Verfahren nach einem der Ansprüche 19 bis 22, **dadurch gekennzeichnet, dass** es sich um einen kontinuierlichen Prozess handelt, bei welchem Sicherheitsmerkmale wie Sicherheitsfäden von Rollen zugeführt werden, und/oder dass das Mehrschichtlaminat derart zugeschnitten und/oder nachbehandelt insbesondere lokal nachlaminiert wird, dass sich im Bereich wenigstens einer Randkante eine Randverschmelzung (23) ausbildet, wobei bevorzugt die Randverschmelzung (23) erzeugt wird, indem beim Schneiden eine erhöhte Temperatur und/oder ein erhöhter Druck im Schnittbereich angelegt wird.

24. Verwendung eines Mehrschichtlaminates respektive eines Druckträgers nach einem der Ansprüche 1 bis 17 als Abdeckmaterial, Verpackungsmaterial, Kartenmaterial, Sicherheitspapier, insbesondere als Banknote, Check, Ticket, Zertifikat, Aktiendokument, Obligationendokument, Urkunden, Ausweisdokumente, Zutrittsdokumente.

## Claims

1. A multiple layer laminate, as a print substrate, for example as security paper, comprising:
at least one, optionally multilayer plastic layer (22) having a top side (20) and a bottom side (21);
at least one upper paper layer (11) bonded to the plastic layer (22) and present on the top side (20) of the plastic layer (22) as well as at least one lower paper layer (12) bonded to the plastic layer (22) and present on the bottom side (21) of the plastic layer (22);
wherein the plastic layer (22) is a thermoplastic polymeric material, and wherein the bond between the upper paper layer (11) and the plastic layer (22) as well as the lower paper layer (12) and the plastic layer (22) is ensured substantially without additional adhesion promoter by a penetration zone (14) in which parts of the plastic layer (22) are fused to the material of the fiber composite of the paper layer (11), the penetration zones (13, 14) substantially not extending up to the surfaces of the paper layer which face away from the plastic layer (22),
**characterized in that**
at least one of the paper layers (11, 12) is paper which was produced in a cylinder paper machine or in a Fourdrinier paper machine with a security feature in the form of a watermark.

2. The multiple layer laminate according to claim 1, **characterized in that**, the security feature is a gray step watermark (18) preferably made with the use of cellulosic fiber material, such as cotton, and/or flax, and/or linen as the main fiber raw material.

3. The multiple layer laminate according to one of the preceding claims, **characterized in that** the polymeric material has a melt or flow temperature in the range from 100 to 200 °C.

4. The multiple layer laminate according to one of the preceding claims 1-3, **characterized in that** the paper layers (11, 12) have a basis weight in the range from 20 to 50 g/m², and in the resulting multiple layer laminate or the print substrate, respectively, as a whole has a basis weight in the range from 90 to 150 g/m², wherein preferably the plastic layer (22) has a thickness in the range from 5 to 500 µm, preferably in the range from 20 to 50 µm.

5. The multiple layer laminate according to one of the preceding claims 1-4, **characterized in that** both paper layers (11, 12) have a cut-out (15-17) in an at least partly overlapping manner with formation of a window (15-17) so that the plastic layer (22) is exposed in this region, wherein there are regions in which the plastic layer is accessible from both sides and regions in which the plastic layer is accessible from one side only.

6. The multiple layer laminate according to one of the preceding claims 1-4, **characterized in that** the material of the plastic layer is partly amorphous or fully amorphous polyamide, preferably polyamide 12, wherein further preferably the polyamide is on the basis of polyamide 12 with a polyamide on the basis of aliphatic and cycloaliphatic building blocks, if need be with aromatic constituents.

7. The multiple layer laminate according to one of the preceding claims, **characterized in that** at least one of the paper layers (11, 12) is paper which was produced in a cylinder paper machine or in a Fourdrinier paper machine, made with the use of cellulosic fiber material, such as cotton, and/or flax, and/or linen as the main fiber raw material.

8. The multiple layer laminate according to one of the preceding claims, **characterized in that** the polymeric material has a glass transition temperature in the range from 50 to 250 °C, preferably in the range from 75 to 225°C, or in the range from 100 to 200 °C, particularly preferably from 120 to 180 °C, or a flow temperature if the glass transition temperature is below room temperature, in the range from 50 to 250 °C, preferably in the range from 75 to 225 °C, or in the range from 100 to 200 °C, particularly preferably from 120 to 180 °C, and/or **in that** the polymeric material is in particular a transparent or colored, preferably partly amorphous or completely amorphous polyamide, polypropylene or polyethylene, particularly preferably a polyamide based on aliphatic and cycloaliphatic building blocks, optionally with aromatic moieties.

9. The multiple layer laminate according to one of the preceding claims, **characterized in that** the paper layers (11, 12) have a basis weight in the range from 5 to 500 g/m², preferably in the range from 10 to 80 g/m², particularly preferably in the range from 20 to 50 g/m², and **in that** the plastic layer (22) has a thickness in the range from 5 to 500 µm, preferably in the range from 10 or 20, respectively, to 80 µm, particularly preferably in the range from 20 to 50 µm, particularly preferably the resulting multiple layer laminate or the print substrate, respectively, as a whole having a basis weight in the range from 90 to 120 g/m² or 80 to 150 g/m².

10. The multiple layer laminate according to one of the preceding claims, **characterized in that** the plastic layer (22) has at least one security feature of the selected from electric, electronic, magnetic and/or optical information element or a combination of such information elements, preferably selected from the group of: imprint, fluorescent region, polarizing region, polarized fluorescent region, polarized absorbent region, hologram, photochromic regions, microembossing, microperforation, chip, electrically conductive region, magnetic region, and/or **in that** at least one of the paper layers (11, 12) is provided with a security feature, wherein preferably this security feature of the at least one paper layer (11, 12) is selected from: watermark, in particular gray step watermark (18); security filament (19); OVD; mixed fibers; security pigments; iridescent color applications, chip, magnetic stripes.

11. The multiple layer laminate according to one of the preceding claims, **characterized in that** at least one of the paper layers (11, 12) has a cut-out (15-17) right through so that the plastic layer (22) is exposed in this region, particularly preferably both paper layers (11, 12) having such a cut-out in an at least partly overlapping manner with formation of a window (15-17), particularly preferably having an irregular or fluid edge, respectively, wherein preferably the plastic film has at least one security feature at least in the region of the window (15-17), and wherein further preferably at least one further security feature, in particular having polarizing properties, can be checked with the aid of at least one window, in particular having polarizing properties.
and wherein at least one of the paper layers (11, 12) has a security feature and/or the plastic layer (22) has at least one security feature in the form of an electrical, electronic, magnetic or optical information medium or of a combination of such information media.

12. The multiple layer laminate according to one of claims 9 to 11, **characterized in that** a further plastic layer having the same contour as the window is inserted into the window in the region of the cut-out (15-17) during production.

13. The multiple layer laminate according to one of the preceding claims, in particular in the form of a print substrate having a number of double folds which is more than twice as great as the number of double folds of an individual paper layer (11, 12), the number of double folds preferably being more than 5 times, particularly preferably more than 10 times or even more than 100 times as great as the number of double folds of an individual paper layer (11, 12).

14. The multiple layer laminate according to one of the preceding claims, **characterized in that** the multiple layer laminate has at least one edge which has, at least in sections, an edge fusion (23) which at least partly covers the lateral edge of at least one of the paper layers (11, 12), the edge fusion (23) preferably being formed from the material of the plastic layer (22).

15. The multiple layer laminate according to one of the preceding claims, **characterized in that** the penetration depth (13, 14) is formed so that substantially at least 10 µm of that surface of at least one of the paper layers (11, 12) which faces away from the plastic layer (22) are substantially not penetrated by plastic, preferably **in that** the penetration depth (13, 14) is formed so that substantially at least 15 µm, preferably substantially at least 20 µm, particularly preferably substantially at least 30 µm, of that surface of at least one of the paper layers (11, 12) which faces away from the plastic layer (22) are substantially not penetrated by plastic, and/or **in that** the penetration depth (13, 14) has a thickness of at least 10 µm, preferably of at least 15 µm, particularly preferably of at least 30 µm.

16. The multiple layer laminate according to one of the preceding claims, **characterized in that** the penetration depth (13, 14) has a different thickness in some regions.

17. The multiple layer laminate according to one of the preceding claims, **characterized in that** the plastic layer (22) is formed so as to be polarizing and/or fluorescent and/or phosphorescent and/or optically refractive, wherein particularly preferably a polarized absorption and/or a polarized emission is present.

18. A print substrate, packaging material, covering material, security paper, in particular bank note, check, ticket, certificate, share document, bond document, document, identity document or admission document produced starting from a multiple layer laminate according to one of the preceding claims.

19. A process for the production of a multiple layer laminate according to one of claims 1 to 20, **characterized in that** the paper layers (11, 12) are at least partly fused to the plastic layer (22) in a laminator, a temperature in the range from 50 to 250 °C, preferably in the range from 75 to 225 °C, or in the range from 100 to 200 °C, particularly preferably from 140 to 180 °C, being used, and a pressure in the range from 10 Pa to 10 MPa, preferably from 1 kPa to 10 MPa, or from 1 kPa to 5 MPa, particularly preferably in the range from 0.5 MPa to 2 MPa, being used.

20. The process according to claim 19, **characterized in that** the temperature is initially increased from room temperature to the target temperature and then the pressure is increased from atmospheric pressure to the target pressure.

21. The process as according to one of claims 19 or 20, **characterized in that** it is a continuous process in which the individual substrates (11, 12, 22) are fed by rollers, and **in that** the laminator is a roller laminator, the plastic layer (22) being fed centrally and the two paper layers (11, 12) from the top and the bottom, and particularly preferably a nip pressure in the range from 1 to 500 N/mm being used.

22. The process according to one of claims 19 to 21, **characterized in that** a stretched film having polarizing properties is used as plastic layer (22), at least in regions.

23. The process according to one of claims 21 to 24, **characterized in that** it is a continuous process, in which security features such as security threats are introduced into the process by rolls and/or **in that** the multiple layer laminate is cut to size and/or aftertreated, in particular subsequently locally laminated, in such a way that an edge fusion (23) is formed in the region of at least one edge.

24. The use of a multiple layer laminate or of a print substrate, respectively, as claimed in one of claims 1 to 17 as covering material, packaging material, card material, security paper, in particular as a bank note, check, ticket, certificate, share document, bond document, document, identity documents or admission documents.

## Revendications

1. Stratifié multicouches utilisé comme support d'impression, par exemple comme papier de sécurité, qui comprend :
au moins une couche de matière synthétique (22) réalisée en une et éventuellement en plusieurs couches et qui présente un côté supérieur (20) et un côté inférieur (21),
au moins une couche supérieure de papier (11) reliée à la couche de matière synthétique (22) sur le côté supérieur (20) de la couche de matière synthétique (22), et au moins une couche inférieure de papier (11) reliée à la couche de matière synthétique (22) sur le côté inférieur (20) de la couche de matière synthétique (22),
la couche de matière synthétique (22) étant un matériau polymère thermoplastique,
la liaison entre la couche supérieure de papier (11) et la couche de matière synthétique (22) et entre la couche inférieure de papier (11) et la couche de matière synthétique (22) étant assurée essentiellement sans agent supplémentaire de renforcement de l'adhérence par une zone de pénétration (14) dans laquelle des parties de la couche en matière synthétique (22) sont fondues avec la pâte du composite de fibres de la couche de papier (11),
la zone de pénétration (13, 14) ne s'étendant essentiellement pas jusqu'à la surface de la couche de papier (11) non tournée vers la couche de matière synthétique (22)
**caractérisé en ce que**
au moins une des couches de papier (11, 12) est un papier qui a été fabriqué dans une machine à tamis rond ou dans une machine à tamis long, et présentant une caractéristique de sécurité en forme de filigrane (18).

2. Stratifié multicouches selon la revendication 1, **caractérisé en ce que** la caractéristique de sécurité est un filigrane (18) à niveaux de gris, de préférence en recourant comme matière première principale des fibres à un matériau de fibres cellulosiques telles que le coton et/ou la toile et/ou le lin.

3. Stratifié multicouches selon l'une des revendications précédentes, **caractérisé en ce que** le matériau polymère a une température de transition de fusion ou une température d'écoulement comprise dans la plage de 100 à 200°C.

4. Stratifié multicouches selon l'une des revendications précédentes, **caractérisé en ce que** les couches de papier (11, 12) ont un poids par unité de surface compris dans la plage de 20 à 50 g/m², le stratifié multicouches ou support d'impression ainsi obtenu présentant un poids global par unité de surface compris dans la plage de 90 à 150 g/m², et **en ce que** de préférence la couche de matière synthétique (22) a une épaisseur comprise dans la plage de 5 à 500 µm, de préférence dans la plage de 20 à 50 µm.

5. Stratifié multicouches selon l'une des revendications précédentes, caractérisé en ce les couches de papier (11, 12) sont traversée par des découpes (15-17) de telle sorte que la couche de matière synthétique (22) est libérée dans cette partie, les deux couches de papier (11, 12) présentant une telle découpe au moins partiellement superposée pour former une fenêtre (15-17), et de façon qu'il y a des régions dans lesquelles la matière synthétique (22) est libérée vers une côté seulement et des régions dans lesquelles la matière synthétique (22) est libérée vers les deux côtés.

6. Stratifié multicouches selon l'une des revendications précédentes, caractérisé en ce le matériau polymère est un polyamide partiellement ou complètement amorphe, de préférence polyamide 12, et de préférence à la base de polyamide 12 avec du polyamide à la base d'éléments aliphatiques et cycloaliphatiques, et optionnellement avec des éléments aromatiques.

7. Stratifié multicouches selon l'une des revendications précédentes, **caractérisé en ce qu'**au moins une des couches de papier (11, 12) est un papier qui a été fabriqué dans une machine à tamis rond ou dans une machine à tamis long, en recourant comme matière première principale des fibres à un matériau de fibres cellulosiques telles que le coton et/ou la toile et/ou le lin.

8. Stratifié multicouches selon l'une des revendications précédentes, **caractérisé en ce que** le matériau polymère a une température de transition vitreuse comprise dans la plage de 50 à 250°C, de préférence dans la plage de 75 à 225°C ou dans la plage de 100 à 200°C et de façon particulièrement préférable dans la plage de 120 à 180°C, ou si la température de transition vitreuse est inférieure à la température ambiante, une température d'écoulement comprise dans la plage de 50 à 250°C, de préférence dans la plage de 75 à 225°C ou dans la plage de 100 à 200°C et de façon particulièrement préférable de 120 à 180°C, et/ou **en ce que** le matériau polymère est un polyamide, polypropylène ou polyéthylène en particulier transparent, coloré, de préférence partiellement amorphe ou complètement amorphe, et de façon particulièrement préférable un polyamide à base de composants aliphatiques ou cycloaliphatiques, éventuellement avec des teneurs en composants aromatiques.

9. Stratifié multicouches selon l'une des revendications précédentes, **caractérisé en ce que** les couches de papier (11, 12) ont un poids par unité de surface compris dans la plage de 5 à 500 g/m², de préférence dans la plage de 10 à 80 g/m² et de façon particulièrement préférable dans la plage de 20 à 50 g/m² et **en ce que** la couche de matière synthétique (22) a une épaisseur comprise dans la plage de 5 à 500 µm, de préférence dans la plage de 10 ou 20 à 80 µm et de façon particulièrement préférable dans la plage de 20 à 50 µm, le stratifié multicouches ou support d'impression ainsi obtenu présentant de façon particulièrement préférable un poids global par unité de surface compris dans la plage de 15 à 1 500 g/m² ou de 50 à 500 g/m², de préférence dans la plage de 80 à 180 g/m² ou de 60 à 200 g/m² et de façon particulièrement préférable dans la plage de 90 à 120 g/m² ou de 80 à 150 g/m².

10. Stratifié multicouches selon l'une des revendications précédentes, **caractérisé en ce que** la couche de matière synthétique (22) présente au moins une caractéristique de sécurité qui présente la forme d'un moyen électrique, électronique, magnétique ou optique d'information ou une combinaison de ces moyens d'information de préférence la ou les caractéristiques de sécurité de la couche de matière synthétique (22) étant sélectionnées parmi une impression, une zone fluorescente, une zone polarisante, une zone fluorescente polarisée, une zone absorbante polarisée, un hologramme, des zones photochromes, un microgaufrage, microperforation, une puce, une zone électriquement conductrice ou une zone magnétique, et/ou la couche de papier (11,12) présente au moins une caractéristique de sécurité et de préférence **en ce que** la caractéristique de sécurité de la ou des couches de papier (11, 12) est sélectionnée parmi un filigrane et en particulier un filigrane (18) à niveaux de gris, un fil de sécurité (19), un OVD, des fibres Melier, des pigments de sécurité, des applications de couleurs irisées, une puce ou une bande magnétique.

11. Stratifié multicouches selon l'une des revendications précédentes, **caractérisé en ce qu'**au moins une des couches de papier (11, 12) est traversée par une découpe (15-17) de telle sorte que la couche de matière synthétique (22) est libérée dans cette partie, les deux couches de papier (11, 12) présentant de façon particulièrement préférable une telle découpe au moins partiellement superposée pour former une fenêtre (15-17), et de façon particulièrement préférable avec une bordure irrégulière respective glissante, de préférence en ce que la feuille de matière synthétique présente au moins une caractéristique de sécurité au moins dans la zone de la fenêtre (15-17) et de préférence **en ce qu'**à l'aide d'au moins une fenêtre et en particulier à propriété polarisante, au moins une autre caractéristique de sécurité qui présente en particulier des propriétés polarisantes peut être vérifiée.

12. Stratifié multicouches selon l'une des revendications 9 à 11, **caractérisé en ce que** lors de la fabrication, une autre couche de matière synthétique qui présente le même contour de la fenêtre est placée dans la fenêtre dans la zone de la découpe (15-17).

13. Stratifié multicouches selon l'une des revendications précédentes, qui présente en particulier la forme d'un support d'impression, dont l'indice de double pliage qui vaut au moins le double de l'indice de double pliage d'une des couches individuelles de papier (11, 12), l'indice de double pliage étant de préférence plus de 5 fois et de façon particulièrement préférable plus de 10 fois ou même plus de 100 fois plus grand que l'indice de double pliage d'une des couches de papier (11, 12).

14. Stratifié multicouches selon l'une des revendications précédentes, caractérisé en ce le stratifié multicouches présente au moins un bord qui dispose au moins dans certaines parties d'une fusion de bordure (23) qui recouvre au moins en partie le bord latéral d'au moins une des couches de papier (11, 12), la fusion de bordure (23) étant de préférence formée de matériau de la couche de matière synthétique (22).

15. Stratifié multicouches selon l'une des revendications précédentes, **caractérisé en ce que** la profondeur de pénétration (13, 14) est telle qu'essentiellement au moins 10 µm de la surface d'au moins une des couches de papier (11, 12) non tournée vers la couche de matière synthétique (22) n'est essentiellement pas traversée par la matière synthétique, **en ce que** de préférence la profondeur de pénétration (13, 14) est telle qu'essentiellement au moins 15 µm, de préférence essentiellement au moins 20 µm et de façon particulièrement préférable essentiellement au moins 30 µm de la surface d'au moins une des couches de papier (11, 12) non tournée vers la couche de matière synthétique (22) ne sont essentiellement pas traversés par la matière synthétique et/ou **en ce que** la profondeur de pénétration (13, 14) présente une épaisseur d'au moins 10 µm, de préférence d'au moins 15 µm et de façon particulièrement préférable d'au moins 30 µm.

16. Stratifié multicouches selon l'une des revendications précédentes, **caractérisé en ce que** la profondeur de pénétration (13, 14) présente une épaisseur différente dans certaines zones.

17. Stratifié multicouches selon l'une des revendications précédentes, **caractérisé en ce que** la couche de matière synthétique (22) est polarisante et/ou fluorescente et/ou phosphorescente et/ou à diffraction optique, avec de façon particulièrement préférable une absorption polarisée et/ou une émission polarisée.

18. Support d'impression, matériau d'emballage, matériau de recouvrement, papier de sécurité et en particulier billet de banque, chèque, ticket, certificat, titre commercial, document obligataire, document officiel, document d'identité, document d'accès fabriqués à partir d'un stratifié multicouches selon l'une des revendications précédentes.

19. Procédé de fabrication d'un stratifié multicouches selon l'une des revendications 1 à 20, **caractérisé en ce que** dans un stratificateur, on fait fondre au moins en partie les couches de papier (11, 12) avec la couche de matière synthétique (22), en utilisant une température comprise dans la plage de 50 à 250°C, de préférence dans la plage de 75 à 225°C ou dans la plage de 100 à 200°C et de façon particulièrement préférable dans la plage de 140 à 180°C, et on utilise une pression comprise dans la plage de 10 Pa à 10 MPa, de préférence de 1 kPa à 10 MPa ou de 1 kPa à 5 MPa et de façon particulièrement préférable dans la plage de 0,5 MPa à 2 MPa.

20. Procédé selon la revendication 19, **caractérisé en ce que** l'on augmente la température d'abord en partant de la température ambiante jusqu'à la température visée, la pression étant ensuite augmentée de la pression normale à la pression visée.

21. Procédé selon l'une des revendications 19 ou 20, **caractérisé en ce qu'**il s'agit d'un procédé continu dans lequel les différents supports (11, 12, 22) sont apportés par des rouleaux et **en ce que** le stratificateur est un stratificateur à rouleaux, la couche de matière synthétique (22) étant apportée au milieu et les deux couches de papier (11, 12) respectivement par le haut et par le bas en appliquant de façon particulièrement préférable une poussée linéaire comprise dans la plage de 1 à 500 N/mm.

22. Procédé selon l'une des revendications 19 à 21, **caractérisé en ce que** comme couche de matière synthétique (22), on utilise au moins dans certaines parties une feuille étirée à propriétés polarisantes.

23. Procédé selon l'une des revendications 21 à 24, **caractérisé en ce que** c'est un procédé continu et **en ce que** que le stratifié multicouches est découpé et/ou post-traité et en particulier post-stratifié localement de manière à former dans la zone d'au moins une bordure une fusion de bord (23).

24. Utilisation d'un stratifié multicouches ou d'un support d'impression selon l'une des revendications 1 à 17 comme matériau de recouvrement, matériau d'emballage, matériau de carte, papier de sécurité et en particulier comme billet de banque, chèque, ticket, certificat, titre commercial, document obligataire, document officiel, documents d'identité ou documents d'accès.
